(19) **Europäisches Patentamt**
**European Patent Office**
**Office européen des brevets**

(11) **EP 3 404 849 B1**

(12) **FASCICULE DE BREVET EUROPEEN**

(45) Date de publication et mention
de la délivrance du brevet:
**28.08.2019 Bulletin 2019/35**

(51) Int Cl.:
*H04B 7/185* (2006.01)   *H01Q 1/24* (2006.01)
*H04B 7/0404* (2017.01)   *H04W 36/18* (2009.01)

(21) Numéro de dépôt: **18166710.6**

(22) Date de dépôt: **11.04.2018**

(54) **STATION AU SOL MULTI-ANTENNES POUR METTRE EN OEUVRE UN BASCULEMENT TRANSPARENT AVEC DIVERSITÉ ENTRE DEUX SATELLITES DÉFILANTS ET PROCÉDÉ DE BASCULEMENT CORRESPONDANT.**

MEHRANTENNEN BODENSTATION ZUR DURCHFÜHRUNG EINER NAHTLOSEN UMSCHALTUNG MIT DIVERSITÄT ZWISCHEN ZWEI DURCHFLIEGENDEN SATELLITEN UND ENTSPRECHENDES UMSCHALTUNGSVERFAHREN.

MULTI-ANTENNA GROUND STATION FOR PERFORMING A SEAMLESS HANDOVER WITH DIVERSITY BETWEEN TWO PASSING SATELLITES AND CORRESPONDING SWITCHING METHOD.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2017 FR 1700518**

(43) Date de publication de la demande:
**21.11.2018 Bulletin 2018/47**

(73) Titulaire: **THALES**
**92400 Courbevoie (FR)**

(72) Inventeurs:
• **ARNAUD, Mathieu**
**31100 Toulouse (FR)**
• **BOUTILLON, Jean-François**
**31100 Toulouse (FR)**
• **ALMEIDA, Jean-Luc**
**31100 Toulouse (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
**EP-A1- 2 779 482      US-A1- 2007 086 255**
**US-A1- 2016 278 033      US-A1- 2017 105 153**

**Description**

La présente invention concerne une station sol multi-antennes, d'accès à une constellation de satellites défilants de télécommunications, et apte à mettre en oeuvre un basculement transparent avec diversité d'un lien de communication depuis un satellite de départ vers un satellite de destination, et un procédé de basculement correspondant

Sur des systèmes satellitaires de télécommunications utilisant une constellation de satellites défilants sur des orbites de type HEO (en anglais High Earth Orbit) ou MEO (en anglais Médium Earth Orbit) ou LEO (Low Earth Orbit), et des stations sol fixes ou mobiles formant des terminaux du système d'accès aux satellites, l'utilisation d'au moins deux antennes est requise pour permettre un basculement (en anglais « handover ») du lien de communication assurant le service fourni à la station sol depuis un premier satellite descendant de départ en fin de visibilité sur un deuxième satellite ascendant de destination en début de visibilité, dès lors que les antennes des stations sol sont directives.

Jusqu'à présent, les stations sol multi-antennes, fabriquées ou qui ont été proposées, comportent deux antennes et utilisent une seule d'entre elles pendant toute la période séparant deux basculements consécutifs. Par ailleurs, pendant la mise en oeuvre d'un basculement ces stations sol requièrent une double chaîne de démodulation.

Récemment des stations sol sont apparues qui permettent de coupler entre deux basculements de lien la réception d'une même porteuse d'un même satellite pointé par les deux antennes, et de réaliser ainsi une diversité de réception sur les deux antennes.

La demande de brevet EP 2 779 482 A1 décrit l'architecture d'une telle station sol à deux antennes qui permet de ne traiter en diversité que le signal reçu de deux antennes en provenance d'un même satellite.

L'architecture décrite dans le document précité, et les architectures des stations sol produites et en service à ce jour, ne permettent pas de réaliser un basculement transparent (en anglais « seamless ») de lien entre deux satellites au cours duquel une diversité de réception sur au moins deux antennes pointées sur les deux satellites peut être utilisée pour renforcer la qualité et la fiabilité du basculement. Ces architectures ne permettent pas non plus une utilisation ininterrompue d'une diversité de réception multi-antennes pendant un basculement de lien entre deux configurations de départ et d'arrivée à diversité de réception d'antennes pointant exclusivement sur le premier satellite pour la configuration de départ et sur le deuxième satellite pour la configuration d'arrivée. Ces architectures ne présentent pas non plus la modularité requise permettant un ajout au fur et à mesure d'une nouvelle antenne pour améliorer les performances de réception.

Un premier problème technique est de proposer une architecture de station sol ayant au moins deux antennes directives mobiles qui améliore la transparence d'un basculement de lien entre un premier satellite et un deuxième satellite.

Un deuxième problème technique est de proposer une architecture de station sol qui permet de réaliser au cours du basculement du lien de réception une diversité en réception sur au moins deux antennes, une pointant sur le premier satellite et une autre pointant sur le deuxième satellite.

Un troisième problème technique est de proposer une architecture de station sol qui permet une utilisation ininterrompue d'une diversité de réception multi-antennes pendant un basculement de lien entre deux configurations de départ et d'arrivée à diversité de réception d'antennes pointant exclusivement sur le premier satellite pour la configuration de départ et pointant exclusivement sur le deuxième satellite pour la configuration d'arrivée.

Un quatrième problème technique est de proposer une architecture modulaire qui permet un ajout au fur et à mesure d'une nouvelle antenne pour améliorer les performances de réception.

Un cinquième problème technique est de proposer une architecture de station sol multi-antennes, solution d'au moins un des premier, deuxième, troisième, quatrième problèmes techniques, qui permet, lorsqu'il existe une pluralité d'au moins deux antennes pointant vers un même satellite d'envoyer vers ledit satellite une pluralité de porteuses portant un signal de communication identiques, lesdites porteuses étant adaptées lors de l'émission pour fournir en réception du satellite un front d'onde des porteuses agrégées de manière cohérente.

A cet effet, l'invention a pour objet une station sol multi-antennes d'un système satellitaire de télécommunications utilisant une constellation de satellites défilants. La station sol comprend :

•- un nombre entier P, supérieur ou égal à deux, d'antennes aptes en réception à suivre chacune, pendant une même période de temps prédéterminée, un satellite pris parmi un premier satellite S1 d'origine et un deuxième satellite S2 de destination, tous deux en visibilité pendant ladite période,
•- un dispositif de réception et de traitement multivoies, à P bornes d'entrée, connectées respectivement à P bornes de sortie des P antennes, pour recevoir en entrée dudit dispositif et de traitement P signaux antennaires reçus et fournis en sortie desdites antennes de réception, et à P bornes de sortie pour délivrer en parallèle P signaux traités de sortie, alignés entre eux temporellement et en phase, obtenus respectivement à partir des P P signaux antennaires reçus, et
•- un dispositif de combinaison à diversité configurable, connecté en entrée au dispositif de réception et de traitement multivoies, pour combiner une partie ou la totalité des signaux traités de sortie en fonction d'une consigne de sélection des signaux traités de sortie et traités à combiner, et
•- un dispositif de gestion de diversité et de basculement transparent d'un lien de communication de réception depuis le premier satellite S1 d'origine vers le deuxième satellite S2 de destination.

La station sol est caractérisée en ce que le dispositif de gestion de diversité et de basculement transparent est configuré pour :

•- gérer et coordonner l'exécution d'un basculement du lien de communication depuis le premier satellite S1 d'origine vers le deuxième satellite S2 de destination, ledit basculement du lien de communication étant constitué par une succession d'un nombre k, supérieur ou égal à 2, de basculements Bi transparents et unitaires d'antennes, sélectionnées selon une séquence prédéterminée, chaque basculement Bi transparent et unitaire d'antenne étant un basculement d'une antenne depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2, et
•- pendant chaque basculement transparent et unitaire Bi (32, 34 ; 84, 86, 88), contrôler les antennes, le dispositif de réception et de traitement multivoies ainsi que le dispositif de combinaison à diversité configurable en déterminant et en leur envoyant respectivement :

•* des commandes de pointage d'acquisition des satellites, et
•* des commandes d'alignement temporel et en phase des P signaux reçus en entrée du dispositif de réception et de traitement multivoies élaborées en fonction de mesures d'écarts temporels et en phase de P-1 signaux reçus en entrée par rapport au signal reçu en entrée pris comme signal de référence, et
•* une consigne de sélection des signaux traités de sortie à combiner en fonction de la planification du basculement de la première configuration de diversité C1(i) vers la deuxième configuration de diversité C2(i) et en fonction de mesures de qualités des signaux reçus en entrée du dispositif de réception et de traitement.

Suivant des modes particuliers de réalisation, la station sol multi-antennes comprend l'une ou plusieurs des caractéristiques suivantes :

•- le nombre entier P d'antennes de réception, aptes à pointer et à suivre chacune, pendant une même période de temps prédéterminée, un satellite pris parmi un premier satellite S1 et un deuxième satellite S2, et de voies du dispositif de réception et de traitement est supérieur ou égal à trois, et de préférence égal à trois, et les première et deuxième configurations C1(i), C2(i) de diversité en réception de chaque basculement transparent unitaire Bi sont chacune des configurations dans lesquelles la diversité en réception est mise en oeuvre sur les deux premier et deuxième satellites S1, S2, et pendant chaque basculement transparent unitaire Bi et pendant le basculement du lien de communication, une diversité en réception sur au moins deux antennes est assurée en permanence ;
•- le dispositif de réception et de traitement multivoies (122) est configuré pour :

•* recevoir, normaliser et filtrer sur P voies distinctes et séparées, les P signaux antennaires reçus fournis en sortie par les P antennes (112, 114, 116), en P signaux normalisés et filtrés, ensuite
•* estimer des écarts temporels, des écarts de phase et des écarts de qualité entre un signal normalisé et filtré de référence, pris parmi les P signaux normalisés et filtrés, et les P-1 signaux normalisés et filtrés restants, et fournir lesdits écarts au dispositif de gestion et de basculement ; puis
•* pour chaque voie, appliquer une compensation temporelle et une compensation de phase au signal filtré associé à la voie à partir des commandes d'alignement temporel et en phase correspondantes, élaborées et envoyées par le dispositif de gestion de diversité et de basculement ;
•- le dispositif de réception et de traitement multivoies comprend en outre une batterie de P dispositifs de contrôle automatique de gain AGC pour normaliser les signaux reçus en entrée du dispositif de réception et de traitement multivoies, et une batterie de P filtres passe bande pour filtrer les signaux normalisés, par exemple des filtres SRRC ;
•- le dispositif de réception et de traitement multivoies comprend en outre une batterie de P-1 cross-corrélateurs complexes pour estimer des écarts temporels, des écarts de phase et des écarts de qualité entre un signal normalisé et filtré de référence, pris parmi les P signaux normalisés et filtrés, et les P-1 signaux normalisés et filtrés restants, et fournir lesdits écarts au dispositif de gestion et de basculement, en cherchant pour chaque cross-corrélateur un pic de corrélation qui permet de déduire l'écart temporel entre les signaux comparés, en exploitant l'argument du signal cross-corrélé pour déterminer l'écart de phase entre les signaux comparés, et en exploitant le niveau de corrélation entre les signaux comparés pour déterminer une indication de différence de qualité ;

•- le dispositif de réception et de traitement multivoies comprend en outre une batterie de P de lignes à retard FIFOs à décalage temporel programmable, connectée en aval à une batterie de multiplieurs à compensation de phase programmable, les multiplieurs permettant les compensations de phase étant connectés en entrée au dispositif de combinaison à diversité ;

•- le dispositif de réception et de traitement multivoies est configuré pour ajuster sélectivement le gain de chacune des voies de sorte à pouvoir atténuer de manière progressive le niveau de sortie du signal de sortie d'une cherche d'une chaine de sortie que l'on souhaite retirer de la combinaison à diversité, et le dispositif de gestion de diversité et de basculement est configuré lors d'un basculement d'antenne du premier satellite au deuxième satellite pour commander une rampe de gain dégressif sur la chaîne à retirer par le dispositif de combinaison à diversité, et lorsque la qualité différentielle a dépassé un seuil prédéterminé commander au dispositif de combinaison à diversité de retirer ladite chaine ;

•- la station sol multi-antennes comprend un démodulateur connecté en sortie du dispositif de combinaison à diversité et un dispositif de mise en oeuvre d'une boucle de contrôle de modulation adaptative ACM, et dans laquelle la dynamique de la rampe de gain dégressif est coordonnée avec les caractéristiques dynamiques de la boucle de contrôle de modulation adaptative ACM ;

•- le dispositif de réception et de traitement multivoies est configuré pour ajuster sélectivement le gain de chacune des voies de sorte à pouvoir augmenter de manière progressive le niveau de sortie du signal de sortie d'une chaine de sortie que l'on souhaite ajouter dans la combinaison à diversité, et le dispositif de gestion de diversité et de basculement est configuré pour, lors d'un basculement unitaire d'antenne du premier satellite au deuxième satellite et de la phase de rattachement de l'antenne au satellite de destination, commander une rampe de gain progressive sur la chaîne à ajouter par le dispositif de combinaison à diversité ;

•- le dispositif de gestion de diversité et de basculement est configuré sur détection d'une absence de signal sur une chaine active dans la combinaison pour envoyer une commande de retrait au dispositif de combinaison à diversité ;

•- la station sol comprend un dispositif de fourniture d'un même signal source à émettre en un nombre entier N, inférieur ou égal à P, de bornes de fourniture, et un dispositif d'émission et de traitement pour générer sur N voies un front d'onde à destination d'un satellite, pris parmi le premier satellite S1 et le deuxième satellite S2, connecté en entrée aux N bornes de fourniture, et ayant N bornes de sortie d'émission connectées à N antennes parmi les P antennes d'émission ou égal à P, pour délivrer en parallèle N signaux traités de sortie, décalés entre eux temporellement et en phase de sorte que les fronts d'ondes de chaque antenne sont agrégés en réception satellite, et un dispositif de gestion de diversité en émission configuré pour contrôler le dispositif d'émission et de traitement multivoies en déterminant et en lui envoyant des commandes de décalage temporel et en phase des N signaux émis en sortie du dispositif d'émission et de traitement multivoies élaborées en fonction de mesures de calibration des chaînes émission, d'estimations des contributions internes au terminal en réception et des contributions liées à la différence de distance entre les voies d'émission ;

•- la station sol multi-antennes comprend une chaîne de calibration rétroactive des chaines émission, connectées aux ports d'entrée des N antennes en mode émission au travers de coupleurs de prélèvement de câbles de connexion et d'un commutateur N :1 de sélection de chaine, calibrés pour les contributions internes de chaînes d'émission de la station en termes d'écarts différentiels temporels et en phase ;

•- le dispositif multivoies d'émission et de traitement, et le dispositif de gestion de diversité en émission sont agencés et configurés pour mettre en oeuvre une compensation en boucle fermée des écarts temporels et en phases des N voies d'émission d'une configuration de diversité d'émission dans laquelle, les N antennes utilisées en diversité d'émission sur le satellite pointé sont au même moment des antennes en diversité de réception pointant sur le même satellite, et envoient N signaux identiques décalés entre eux temporellement et en phase pour générer un front d'onde cohérent au niveau du satellite pointé, et le dispositif de gestion de diversité en émission reçoit une mesure de qualité de l'agrégation des porteuses émises par les N antennes en mode, la mesure de qualité de l'agrégation des porteuses ayant été déterminée en termes de différences temporelle et de phase par un récepteur d'une station sol externe distante et retransmise via un canal de transmission de voie retour terrestre ou via un canal symétrique de voie retour du satellite pointé, et corrige les consignes de décalage temporel et de phase, fournies au dispositif multivoies d'émission et de traitement, à partir des différences temporelles et de phase mesurées par la station sol externe ;

•- les N signaux identiques, décalés entre eux temporellement et en phase pour générer un front d'onde cohérent au niveau du satellite pointé, sont des signaux d'une séquence identique de référence, et les signaux différentiels du récepteur de la station sol externe sont déterminés par corrélation, ou les N signaux identiques, décalés entre eux temporellement et en phase pour générer un front d'onde cohérent au niveau du satellite pointé, sont des signaux obtenus à partir de répliques d'un même signal de trafic, et les signaux différentiels du récepteur de la station sol externe sont déterminés par corrélation du signal reçu retransmis par le satellite.

L'invention a également pour objet un procédé de basculement transparent d'un lien de communication dans un mode réception ou un mode dual réception/émission depuis un premier satellite S1 d'origine vers un deuxième satellite S2 de destination. Le procédé de basculement est mis en oeuvre par une station sol comprenant :

•- un nombre entier P, supérieur ou égal à deux, d'antennes aptes en réception à suivre chacune, pendant une même période de temps prédéterminée, un satellite pris parmi un premier satellite S1 d'origine et un deuxième satellite S2 de destination, tous deux en visibilité pendant ladite période,

•- un dispositif de réception et de traitement multivoies, à P bornes d'entrée, connectées respectivement à P bornes de sortie des P antennes, pour recevoir en entrée dudit dispositif et de traitement P signaux antennaires reçus et fournis en sortie desdites antennes de réception, et à P bornes de sortie pour délivrer en parallèle P signaux traités de sortie, alignés entre eux temporellement et en phase, obtenus respectivement à partir des P signaux antennaires reçus, et

•- un dispositif de combinaison à diversité configurable), connecté en entrée au dispositif de réception et de traitement multivoies, pour combiner une partie ou la totalité des signaux traités de sortie en fonction d'une consigne de sélection des signaux traités de sortie et traités à combiner, et

•- un dispositif de gestion de diversité et de basculement transparent du lien de communication.

Le procédé de basculement du lien de communication est caractérisé en ce que le basculement du lien de communication est constitué par une succession d'un nombre k, supérieur ou égal à 2, de basculements Bi transparents et unitaires d'antennes, sélectionnées selon une séquence prédéterminée, chaque basculement Bi transparent et unitaire d'antenne étant un basculement d'une antenne depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2.

Suivant des modes particuliers de réalisation, le procédé de basculement transparent d'un lien de communication comprend l'une ou plusieurs des caractéristiques suivantes :

•- chaque basculement transparent et unitaire Bi comprend des étapes de contrôle du dispositif de réception et de traitement multivoies ainsi que du dispositif de combinaison à diversité configurable en déterminant et en leur envoyant respectivement :

•* des commandes de pointage d'acquisition des satellites, et
•* des commandes d'alignement temporel et en phase des P signaux reçus en entrée du dispositif de réception et de traitement multivoies élaborées en fonction de mesures d'écarts temporels et en phase de P-1 signaux reçus en entrée par rapport au signal reçu en entrée pris comme signal de référence, et
•* une consigne de sélection des signaux traités de sortie à combiner en fonction de la planification du basculement de la première configuration de diversité C1 vers la deuxième configuration de diversité C2 et en fonction de mesures de qualités des signaux reçus en entrée du dispositif de réception et de traitement, les étapes de contrôle étant mises en oeuvre par le dispositif de gestion de diversité et de basculement transparent du lien de communication.

L'invention sera mieux comprise à la lecture de la description de plusieurs formes de réalisation qui va suivre, donnée uniquement à titre d'exemple et faite en se référant aux dessins sur lesquels :

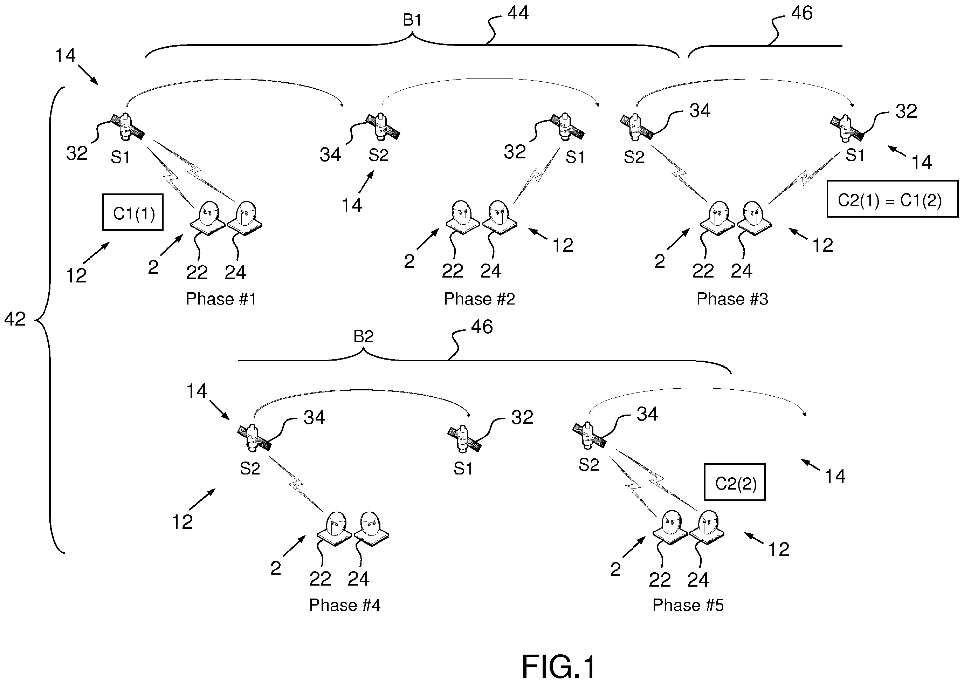

- la Figure 1 est une vue du déroulement d'un basculement en réception d'un lien de communication depuis un premier satellite S1 vers un deuxième satellite S2, mis en oeuvre par une station sol à deux antennes directives mobiles selon l'invention et suivant un premier mode de réalisation ;

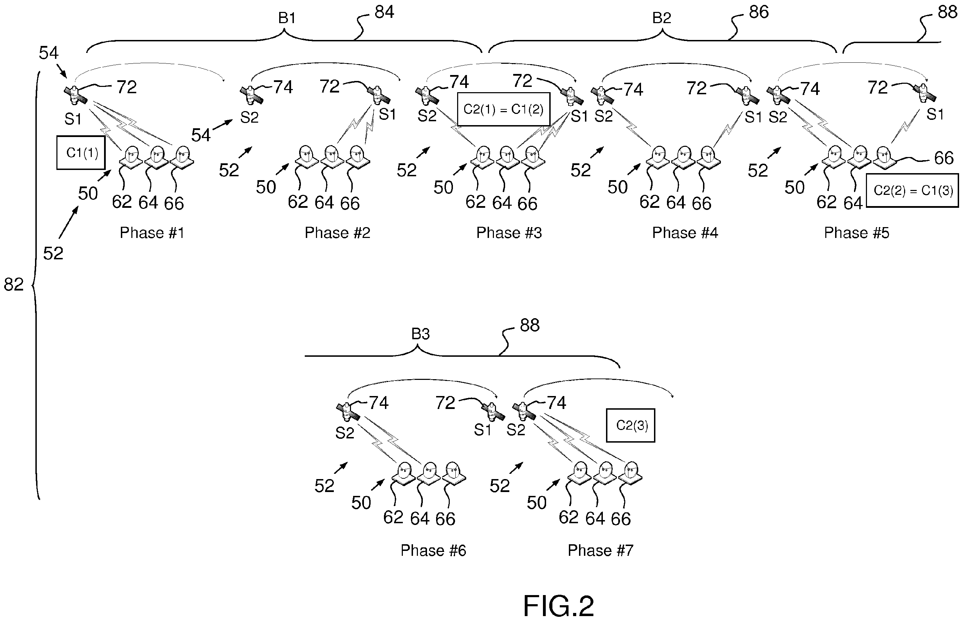

- la Figure 2 est une vue du déroulement d'un basculement en réception d'un lien de communication depuis un premier satellite S1 vers un deuxième satellite S2, mis en oeuvre par une station sol à trois antennes directives mobiles suivant un deuxième mode de réalisation ;

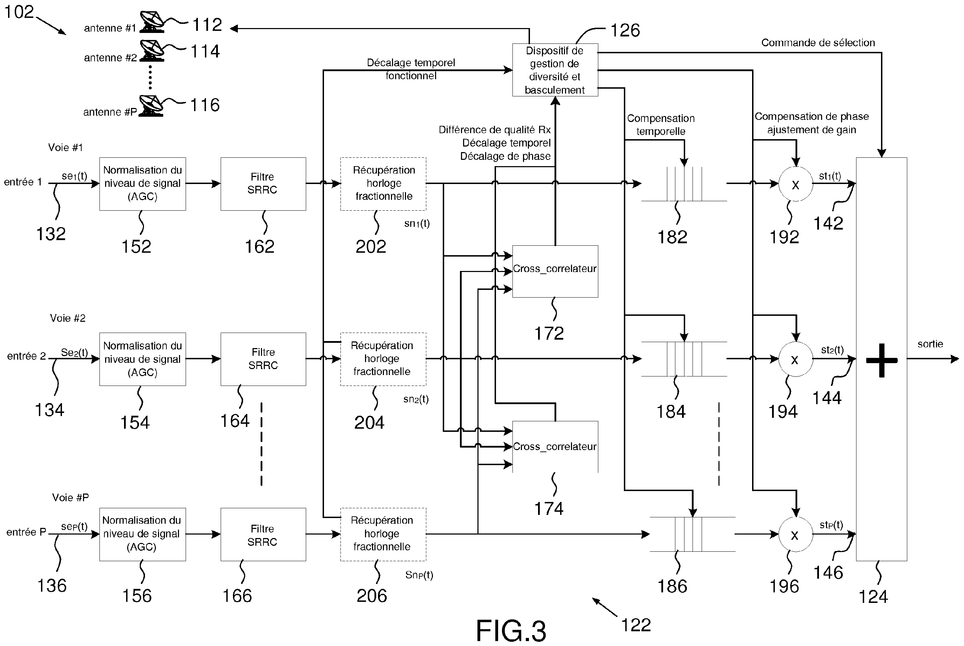

- la Figure 3 est une vue d'une architecture modulaire générale d'une station sol multi-antennes concernant les dispositifs de ladite station et leur agencement qui permet la mise en oeuvre d'un basculement transparent en réception d'un lien de communication depuis un premier satellite de départ S1 vers un deuxième satellite S2 avec optimisation de l'utilisation de la diversité en réception, comme représenté dans les exemples des Figures 1 et 2 ;

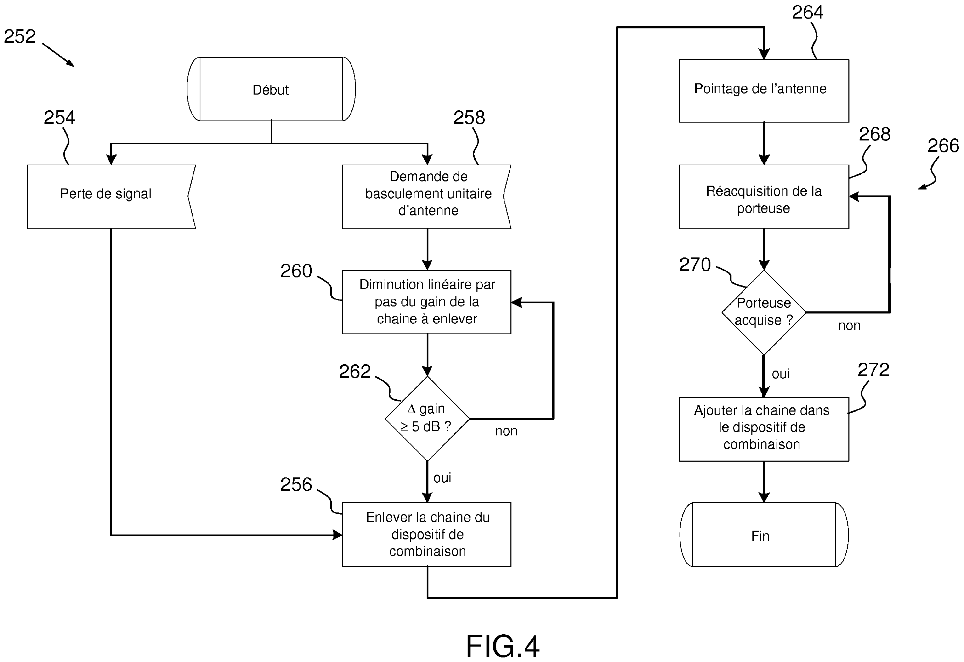

- la Figure 4 est un ordinogramme d'un basculement transparent unitaire d'antenne depuis le premier satellite de départ S1 vers le deuxième satellite S2, le basculement transparent unitaire étant mis en oeuvre par la station sol multi-antennes selon l'invention de la Figure 3, et étant une étape générique d'une succession d'étapes de basculement transparent unitaire, ladite succession formant un basculement en réception d'un lien de communication depuis le premier satellite S1 vers le deuxième satellite S2 ;

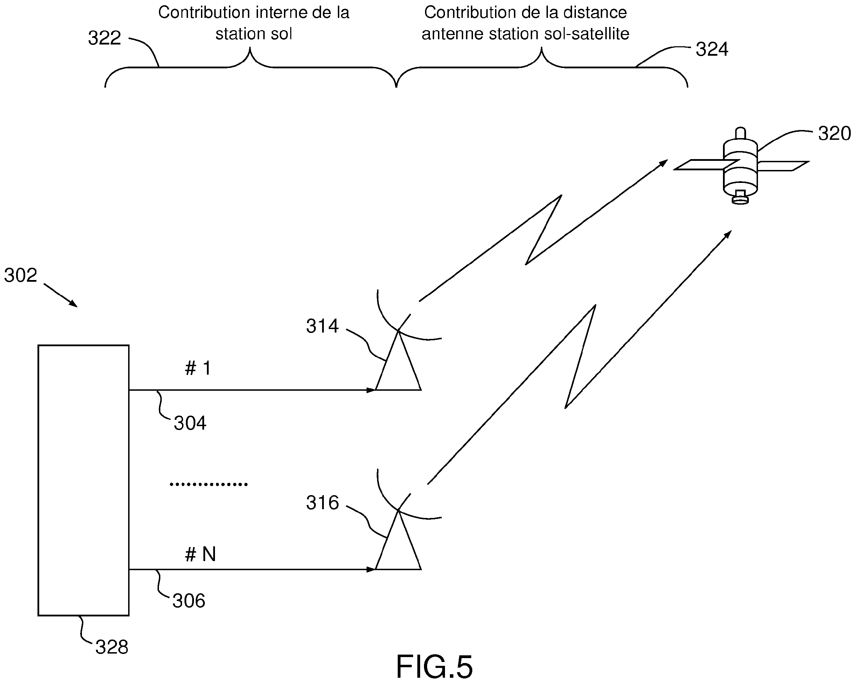

- la Figure 5 est une vue partielle d'un système de communications dans laquelle une station sol selon l'invention est limitée pour simplifier l'illustration à deux voies d'émission en diversité d'émission et à deux antennes directives mobiles, fonctionnant en mode émission et pointant avec suivi vers un même satellite, la vue partielle permettant d'identifier les contributions respectives apportées par les équipements de la station sol sur chacune des voies et par les trajets géométriques différenciés entre les antennes de la station sol et le satellite pointé aux décalages temporels et en phase depuis les entrées des voies jusqu'au satellites ;

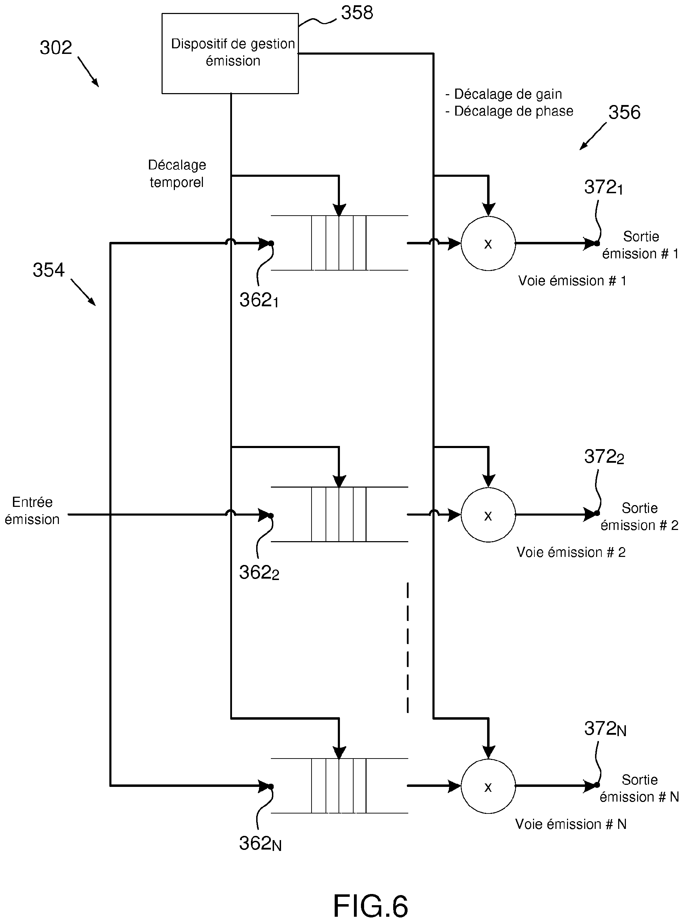

- la Figure 6 est une vue partielle d'une architecture modulaire d'une station sol multi-antennes, limitée à un dispositif d'émission et de traitement multivoies à N voies qui permet d'émettre N porteuses à la même fréquence en portant un même signal de communication, au travers de N antennes fonctionnant en mode émission et pointées vers le même satellite, de sorte à réaliser une réception par le satellite pointé des N porteuses agrégées de manière cohérente ;

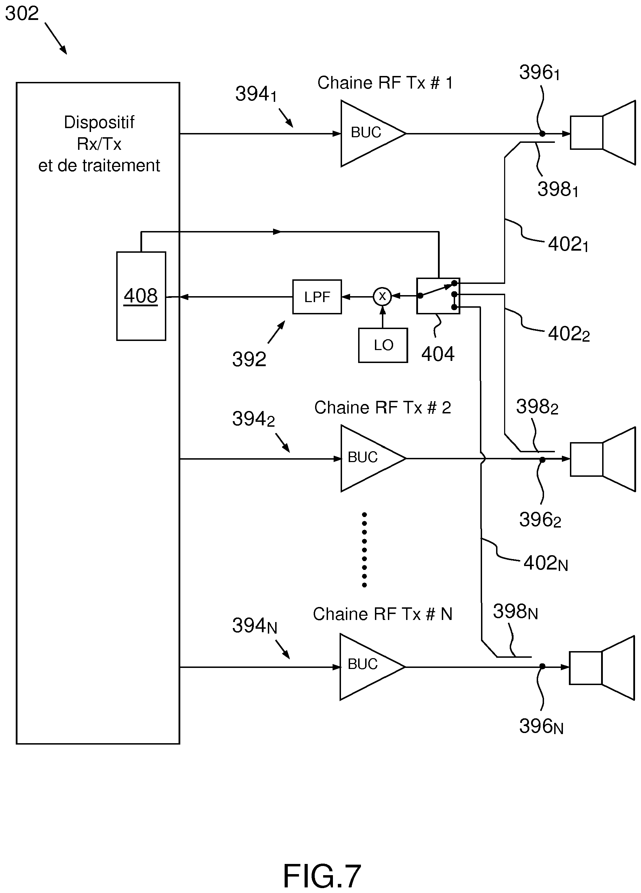

- la Figure 7 est une vue d'un système de calibration des chaines d'émission RF, connectées entre les sorties de N voies d'émission du dispositif d'émission et de traitement multivoies et les antennes associées en mode émission ;

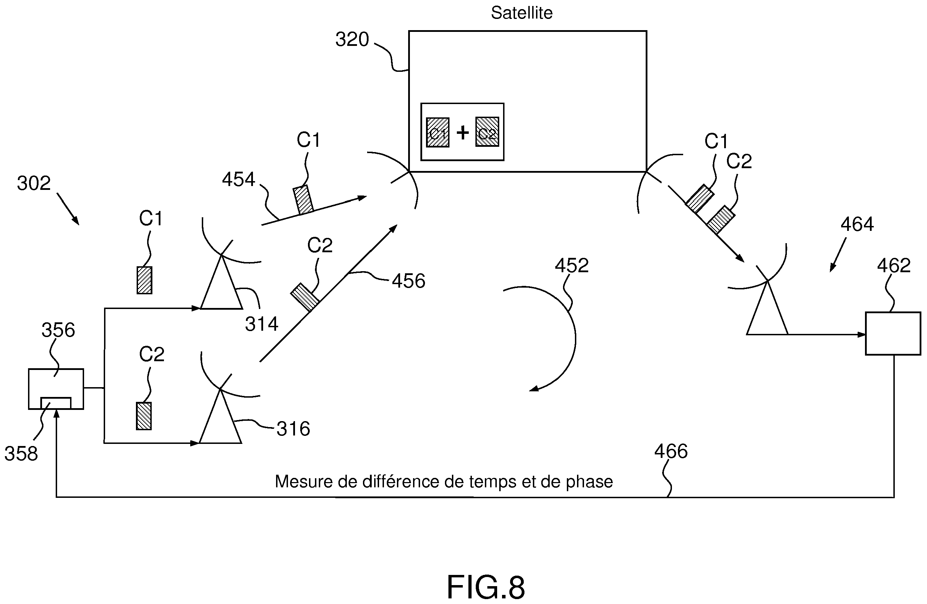

- la Figure 8 est une vue d'un exemple de système de compensation en boucle fermée des décalages temporels et en phase appliqués aux signaux des N voies d'émission du dispositif d'émission et de traitement de la station sol, le système de compensation utilisant une séquence ou message de référence.

Sur des systèmes satellitaires de télécommunications utilisant une constellation de satellites défilants sur des orbites de type HEO (en anglais High Earth Orbit) ou MEO (en anglais Médium Earth Orbit) ou LEO (Low Earth Orbit), des stations sol fixes ou mobiles, formant des terminaux du système satellitaire sont utilisées pour accéder à un ou plusieurs des satellites et échanger avec eux des signaux de télécommunications portés par une plusieurs porteuses.

Les stations sol comportent et doivent utiliser au moins deux antennes pour leur permettre de mettre en oeuvre des basculements (en anglais « handover ») de liens de communication depuis un premier satellite descendant de départ en fin de visibilité vers un deuxième satellite ascendant de destination en début de visibilité, dès lors que lesdites antennes des stations sol sont directives.

Le concept sous jacent de l'invention est de renforcer l'utilisation en diversité des antennes en mode réception et/ou en mode émission pendant un basculement et hors basculement et d'offrir la possibilité d'ajouter au gré du temps des antennes additionnelles qui permettent d'augmenter la disponibilité et les performances radio RF de la station sol et d'assurer également une maintenance de la station sol sans nuire à la disponibilité du service en cours.

Le concept sous jacent de l'invention est fondé sur l'exploitation de mesures, réalisées par exemple à l'aide d'un ou plusieurs cross-corrélateurs, de différences de trajet, subies par les signaux reçus ou émis par deux ou plus antennes de la station, ces mesures permettant aux signaux reçus ou à émettre d'être ensuite recalés en temps, en phase et en amplitude et d'être plus tard sommés de façon cohérente. Ainsi, une amélioration du rapport signal à bruit de $10\log(N)$ dB peut être atteinte, N étant le nombre d'antennes impliquées dans l'opération de sommation ou agrégation cohérente.

Suivant la Figure 1 et un premier mode de réalisation, une station sol multi-antennes 2 d'un système satellitaire de télécommunications 12 utilisant une constellation 14 de satellites défilants comprend ici deux antennes directives et mobiles 22, 24, aptes en réception à suivre chacune, pendant une même période de temps prédéterminée, un satellite pris parmi un premier satellite 32 S1 d'origine et un deuxième satellite 34 S2 de destination, tous deux en visibilité pendant ladite période.

La station sol multi-antennes 2 selon l'invention est configurée pour mettre en oeuvre un basculement 42 d'un lien de communication depuis le premier satellite S1 de départ ou d'origine vers le deuxième satellite S2 de destination.

Le basculement du lien de communication 42 est constitué ici par une succession de deux basculements B1, B2, désignés respectivement par les références 44, 46, transparents et unitaires des antennes 22, 24, sélectionnées selon une séquence prédéterminée, ici B1 puis B2.

Le premier basculement B1 transparent et unitaire 44 est le basculement de la première antenne 22 depuis une première configuration de diversité en réception opérationnelle C1(1) dans laquelle la première antenne 22 sélectionnée pour le premier basculement B1 est pointée avec suivi sur le premier satellite S1 vers une deuxième configuration de diversité en réception opérationnelle C2(1) dans laquelle la première antenne 22 sélectionnée est pointée avec suivi sur le deuxième satellite S2.

Le premier basculement B1 transparent et unitaire se décompose en des première, deuxième, troisième phases, exécutées successivement, désignées respectivement par « phase #1 », « phase #2 », « phase #3 ».

Dans la première phase « phase #1 », les première et deuxième antennes 22, 24 reçoivent depuis et transmettent vers le premier satellite S1 suivant la première configuration de diversité C1(1).

Au cours de la deuxième phase « phase #2 », lorsque le premier satellite S1 arrive en fin de course (i.e. présente une élévation par rapport à la station sol strictement inférieure à 15° typiquement), la première antenne 22 cesse d'émettre et de recevoir vers le premier satellite S1 pour aller rallier le deuxième satellite S2 dans la troisième phase « phase #3 ».

Pendant la troisième phase « phase #3 » la première antenne 22 reçoit et transmet vers le deuxième satellite S2 tandis que la deuxième antenne 24 reçoit et transmet vers le premier satellite S1, suivant la deuxième configuration de diversité en réception C2(1).

Le deuxième basculement B2 transparent et unitaire est le basculement de la deuxième antenne 24 depuis une première configuration de diversité en réception opérationnelle C1(2), identique à la deuxième configuration de diversité en réception C2(1) du premier basculement unitaire B1, dans laquelle la deuxième antenne 24 sélectionnée pour le deuxième basculement unitaire B2 est pointée avec suivi sur le premier satellite S1 vers une deuxième configuration de diversité en réception opérationnelle C2(2) dans laquelle la première antenne 22 et la deuxième antenne 24 sélectionnée sont pointées avec suivi vers le deuxième satellite S2.

Le deuxième basculement 46 B2, transparent et unitaire, se décompose en la troisième phase « phase #3 » et des quatrième, cinquième phases, désignées respectivement par « phase #4 », « phase #5 », les troisième, quatrième, cinquième phases étant exécutées successivement.

Pendant la troisième phase « phase #3 » la première antenne 22 reçoit et transmet vers le deuxième satellite S2 tandis que la deuxième antenne 24 reçoit et transmet vers le premier satellite S1, suivant la première configuration de diversité en réception C2(1) du deuxième basculement unitaire.

Au cours de la quatrième phase « phase #4 », la fin de course du premier satellite S1 progressant, la deuxième antenne 24 cesse d'émettre et de recevoir vers le premier satellite S1 pour aller se rallier à la première antenne, et recevoir depuis et émettre vers le deuxième satellite S2 dans la cinquième phase « phase #5 ».

Dans la cinquième phase les première et deuxième antennes 22, 24 reçoivent depuis et transmettent vers le deuxième satellite S2 suivant la deuxième configuration de diversité en réception C2(2) du deuxième basculement unitaire.

Ce processus est répété à chaque nouveau basculement de lien depuis un premier satellite vers un deuxième satellite.

Suivant la Figure 2 et un deuxième mode de réalisation, une station sol multi-antennes 50 d'un système satellitaire de télécommunications 52 utilisant une constellation 54 de satellites défilants comprend ici trois antennes directives et mobiles 62, 64, 66, aptes en réception à suivre chacune, pendant une même période de temps prédéterminée, un satellite pris parmi un premier satellite 72 S1 de départ et un deuxième satellite 74 S2 de destination, tous deux en visibilité pendant ladite période.

La station sol multi-antenne 50 selon l'invention est configurée pour mettre en oeuvre un basculement 82 d'un lien de communication depuis le premier satellite 72 S1 de départ vers le deuxième satellite 74 S2 de destination.

Le basculement du lien de communication 82 est constitué ici par une succession de trois basculements 84 B1, 86 B2, 88 B3 transparents et unitaires des antennes 62, 64, 66 sélectionnées tour à tour, selon une séquence prédéterminée, ici B1 puis B2 puis B3.

Le premier basculement 84 B1 transparent et unitaire est le basculement de la première antenne 62 depuis une première configuration de diversité en réception opérationnelle C1(1) dans laquelle la première antenne 62 sélectionnée pour le premier basculement B1 est pointée avec suivi sur le premier satellite S1 vers une deuxième configuration de diversité en réception opérationnelle C2(1) dans laquelle la première antenne 62 sélectionnée est pointée avec suivi sur le deuxième satellite S2.

Le premier basculement B1 transparent et unitaire se décompose en des première, deuxième, troisième phases, exécutées successivement, désignées respectivement par « phase #1 », « phase #2 », « phase #3 ».

Dans la première phase « phase #1 », les première, deuxième et troisième antennes 62, 64, 64 reçoivent depuis et transmettent vers le premier satellite S1 suivant la première configuration de diversité C1(1).

Au cours de la deuxième phase « phase #2 », lorsque le premier satellite S1 commence à arriver en fin de course (i.e. présente une élévation par rapport à la station sol strictement inférieure à 15° typiquement), la première antenne 62 cesse d'émettre et de recevoir vers le premier satellite S1 pour aller rallier le deuxième satellite S2 dans la troisième phase « phase #3 ».

Pendant la troisième phase « phase #3 » la première antenne 62 reçoit et transmet vers le deuxième satellite S2 tandis que les deuxième et troisième antennes 64, 66 reçoivent et transmettent vers le premier satellite S1, suivant la deuxième configuration de diversité en réception C2(1) du premier basculement transparent unitaire B1.

Le deuxième basculement 86 B2 transparent et unitaire est le basculement de la deuxième antenne 64 depuis une première configuration de diversité en réception opérationnelle C1(2), identique à la deuxième configuration de diversité en réception C2(1) du premier basculement unitaire B1, dans laquelle la deuxième antenne 64 sélectionnée pour le deuxième basculement unitaire B2 est pointée avec suivi sur le premier satellite S1 vers une deuxième configuration de diversité en réception opérationnelle C2(2) à trois antennes dans laquelle la première antenne 62 et la deuxième antenne 64 sélectionnée sont pointées avec suivi vers le deuxième satellite S2 tandis que la troisième antenne 66 reste pointée avec suivi vers le premier satellite S1.

Le deuxième basculement 86 B2 transparent et unitaire se décompose en la troisième phase « phase #3 » et des quatrième et cinquième phases, désignées respectivement par « phase #4 », « phase #5 », les troisième, quatrième et cinquième phases étant exécutées successivement.

Pendant la troisième phase « phase #3 » la première antenne 62 reçoit et transmet vers le deuxième satellite S2 tandis que les deuxième et troisième antennes 64, 66 reçoivent depuis et transmettent vers le premier satellite S1, suivant la première configuration de diversité en réception C2(1) du deuxième basculement unitaire B2.

Au cours de la quatrième phase « phase #4 », la fin de course du premier satellite S1 progressant, la deuxième antenne 64 cesse d'émettre et de recevoir vers le premier satellite S1 pour aller se rallier à la première antenne 62, et recevoir depuis et émettre vers le deuxième satellite S2 dans la cinquième phase « phase #5 ».

Dans la cinquième phase et suivant la deuxième configuration de diversité en réception C2(2) à trois antennes du deuxième basculement unitaire B2, les première et deuxième antennes 62, 64 reçoivent depuis et transmettent vers le deuxième satellite S2 tandis que la troisième antenne 66 reçoit depuis et émet vers le deuxième satellite S2.

Le troisième basculement 88 B3 transparent et unitaire est le basculement de la troisième antenne 66 depuis une première configuration de diversité en réception opérationnelle C1(3), identique à la deuxième configuration de diversité en réception C2(2) du deuxième basculement unitaire B2, dans laquelle la troisième antenne 66 sélectionnée pour le troisième basculement unitaire B3 est pointée avec suivi sur le premier satellite S1 vers une deuxième configuration de diversité en réception opérationnelle C2(3) à trois antennes dans laquelle les première, deuxième et troisième antennes 62, 64, 66 sont pointées avec suivi vers le deuxième satellite S2.

Le troisième basculement 88 B3 transparent et unitaire se décompose en la cinquième phase « phase #5 » et des sixième et septième phases, désignées respectivement par « phase #6 », « phase #7 », les cinquième, sixième et septième phases étant exécutées successivement.

Pendant la cinquième phase « phase #5 » et suivant la première configuration de diversité en réception C1(3) du troisième basculement unitaire B3, les première et deuxième antennes 62, 64 reçoivent depuis et transmettent vers le deuxième satellite S2 tandis que la troisième antenne 66 reçoit depuis et émet vers le premier satellite S1.

Au cours de la sixième phase « phase #6 », la fin de course du premier satellite S1 progressant encore, la troisième antenne 66 cesse d'émettre et de recevoir vers le premier satellite S1 pour aller se rallier aux première et deuxième antennes 62, 64 et recevoir depuis et émettre vers le deuxième satellite S2 dans la septième phase « phase #7 ».

Dans la septième phase et suivant la deuxième configuration de diversité en réception C2(3) à trois antennes du troisième basculement unitaire B3, les première, deuxième et troisième antennes 62, 64, 66 reçoivent depuis et transmettent vers le deuxième satellite S2.

L'intérêt d'utiliser une station sol ayant ici trois antennes mobiles directives selon l'invention et le basculement de lien 82 de la Figure 3 est de garantir en permanence une diversité à deux antennes, y compris dans le cas où les deux satellites S1, S2 envoient la même porteuse. Il est toujours possible de combiner au moins deux antennes de la station sol en permanence.

De manière générale, une station sol multi-antennes d'un système satellitaire de télécommunications utilisant une constellation de satellites défilants comprend un nombre entier P, supérieur ou égal à deux, d'antennes aptes en réception à suivre chacune, pendant une même période de temps prédéterminée, un satellite pris parmi un premier satellite S1 d'origine et un deuxième satellite S2 de destination, tous deux en visibilité pendant ladite période.

La station sol multi-antennes selon l'invention est configurée pour mettre en oeuvre un basculement d'un lien de communication depuis le premier satellite S1 d'origine vers le deuxième satellite S2 de destination. Le basculement du lien de communication est constitué par une succession d'un nombre P, supérieur ou égal à 2, de basculements Bi (i étant compris entre 1 et P) transparents et unitaires d'antennes, sélectionnées selon une séquence prédéterminée. Chaque basculement Bi transparent et unitaire d'antenne est le basculement d'une antenne depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2.

De manière plus particulière, le nombre entier P d'antennes de réception, aptes à pointer et à suivre chacune, pendant une même période de temps prédéterminée, un satellite pris parmi un premier satellite S1 et un deuxième satellite S2, et de voies du dispositif de réception et de traitement est supérieur ou égal à trois. Les première et deuxième configurations C1(i), C2(i), de diversité en réception de chaque basculement transparent unitaire Bi sont chacune des configurations dans lesquelles la diversité en réception est mise en oeuvre sur les deux premier et deuxième satellites S1, S2. Pendant chaque basculement transparent unitaire Bi et pendant le basculement du lien de communication, une diversité en réception sur au moins deux antennes est assurée en permanence.

Suivant la Figure 3 et un mode préféré de l'invention, une station sol multi-antennes 102 comprend un nombre entier P, supérieur ou égal à deux, d'antennes mobiles directives 112 (antenne #1), 114 (antenne #2), 116 (antenne #P), un dispositif de réception et de traitement multivoies 122, un dispositif de combinaison à diversité configurable 124 et un dispositif de gestion 126 de diversité et de basculement transparent d'un lien de communication de réception depuis un premier satellite S1 de départ vers un deuxième satellite S2 de destination.

Les P antennes mobiles directives 112, 114, 116 sont aptes en réception à suivre chacune, pendant une même période de temps prédéterminée, un satellite pris parmi un premier satellite S1 de départ et un deuxième satellite S2 de destination, tous deux en visibilité pendant ladite période.

Le dispositif de réception et de traitement multivoies 122 comporte P bornes d'entrée 132, 134, 136, connectées respectivement à P bornes de sortie des P antennes 112, 114, 116, pour recevoir en entrée dudit dispositif et de traitement P signaux antennaires reçus se1(t), se2(t), ..., seP(t) et fournis en sortie desdites antennes de réception 112, 114, 116. Le dispositif de réception et de traitement multivoies 122 comporte P bornes de sortie 142, 144, 146 pour délivrer en parallèle P signaux traités de sortie st1(t), st2(t), ..., stP(t), alignés entre eux temporellement et en phase, obtenus respectivement à partir des P signaux antennaires reçus se1(t), se2(t), ..., seP(t).

Le dispositif de réception et de traitement multivoies 122 est configuré pour :

•- recevoir, normaliser et filtrer sur P voies distinctes et séparées, numérotées par un indice entier j variant de 1 à P, les P signaux antennaires reçus se1(t), se2(t), ..., seP(t), fournis en sortie par les P antennes 112, 114, 116, en P signaux normalisés et filtrés , ensuite
•- estimer des écarts temporels, des écarts de phase et des écarts de qualité entre un signal normalisé et filtré de référence, pris parmi les P signaux normalisés et filtrés, et les P-1 signaux normalisés et filtrés restants, et fournir lesdits écarts au dispositif de gestion et de basculement ; puis
•- pour chaque voie, appliquer une compensation temporelle et une compensation de phase au signal normalisé et filtré, associé à la voie, à partir des commandes d'alignement temporel et en phase correspondantes, élaborées et envoyées par le dispositif de gestion de diversité et de basculement.

Le dispositif de réception et de traitement multivoies 122 comprend ici par exemple :

•- une batterie de P dispositifs de contrôle automatique de gain AGC 152, 154, 156, pour normaliser les signaux reçus en entrée du dispositif de réception et de traitement multivoies, et
•- une batterie de P filtres passe bande 162, 164, 166,pour filtrer les signaux normalisés, ici des filtres SRRC (en anglais Square Root Raised Cosine).

Le dispositif de réception et de traitement multivoies 122 comprend ici également une batterie de P-1 cross-corrélateurs complexes 172, 174 pour estimer des écarts temporels, des écarts de phase et des écarts de qualité entre un signal normalisé et filtré de référence, pris parmi les P signaux normalisés et filtrés, et les P-1 signaux normalisés et filtrés restants.

La batterie des P-1 cross-corrélateurs complexes 172, 174 est configurée pour fournir lesdits écarts au dispositif de gestion et de basculement, en cherchant pour chaque cross-corrélateur un pic de corrélation qui permet de déduire l'écart temporelle entre les signaux comparés, en exploitant l'argument du signal cross-corrélé pour déterminer l'écart de phase entre les signaux comparés, et en exploitant le niveau de corrélation entre les signaux comparés pour déterminer une indication de différence de qualité.

Le dispositif de réception et de traitement multivoies 122 comprend également une batterie de P de lignes à retard 182, 184, 186 de type FIFOs (en anglais First In First Out) à décalage temporel programmable, connectée en aval à une batterie de P multiplieurs 192, 194, 196 à compensation de phase programmable, les multiplieurs 192, 194, 196 permettant les compensations de phase étant connectés en entrée au dispositif de combinaison à diversité 124.

Le dispositif de réception et de traitement multivoies 122 est configuré pour ajuster sélectivement le gain de chacune des voies de sorte à pouvoir atténuer sélectivement de manière progressive le niveau de sortie du signal de la chaine de sortie que l'on souhaite retirer de la combinaison à diversité.

Le dispositif de combinaison 124 à diversité configurable est connecté en entrée au dispositif de réception et de traitement multivoies 122, pour combiner une partie ou la totalité des signaux traités de sortie en fonction d'une consigne de sélection des signaux traités de sortie et traités à combiner, fournie par le dispositif de gestion de diversité et de basculement 126.

Le dispositif de gestion de diversité et de basculement transparent 126 est configuré pour gérer et coordonner l'exécution d'un basculement du lien de communication depuis un premier satellite S1 d'origine vers un deuxième satellite S2 de destination. Le basculement du lien de communication est constitué par une succession d'un nombre K, supérieur ou égal à 2, de basculements Bi transparents et unitaires d'antennes, sélectionnées selon une séquence prédéterminée.

Chaque basculement Bi transparent et unitaire d'antenne est un basculement d'une antenne prédéterminée depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2.

Le dispositif de gestion de diversité et de basculement transparent 126 est également configuré pour, pendant chaque basculement transparent et unitaire Bi, contrôler les antennes 112, 114, 116, le dispositif de réception et de traitement multivoies 122 ainsi que le dispositif de combinaison à diversité configurable 124 en déterminant et en leur envoyant respectivement :

- •- des commandes de pointage d'acquisition des satellites, et
- •- des commandes d'alignement temporel et en phase des P signaux reçus en entrée du dispositif de réception et de traitement multivoies élaborées en fonction de mesures d'écarts temporels et en phase de P-1 signaux reçus en entrée par rapport au signal reçu en entrée pris comme signal de référence, et
- •- une consigne de sélection des signaux traités de sortie à combiner en fonction de la planification des basculements transparents unitaires Bi (i variant de 1 à K) constituant le basculement depuis la première configuration de diversité C1(1) vers la deuxième configuration de diversité C2(K) et en fonction de mesures de qualités des signaux reçus en entrée du dispositif de réception et de traitement.

Le dispositif de gestion de diversité et de basculement transparent 126 est configuré sur détection d'une absence de signal sur une chaine active dans la combinaison pour envoyer une commande de retrait au dispositif de combinaison à diversité.

Le dispositif de gestion de diversité et de basculement transparent 126 est configuré lors d'un basculement d'antenne du premier satellite au deuxième satellite pour commander une rampe de gain dégressif sur la chaîne à retirer par le dispositif de combinaison à diversité, et orsque la qualité différentielle est passée en dessous d'un seuil prédéterminé commander au dispositif de combinaison à diversité de retirer ladite chaine.

La station sol multi-antennes 102 selon l'invention peut comporter un démodulateur unique, non représenté sur la Figure 3, connecté en sortie du dispositif de combinaison à diversité 124.

La station sol multi-antennes 102 selon l'invention peut de manière optionnelle comporter un dispositif de mise en oeuvre d'une boucle de contrôle de modulation adaptative ACM (en anglais Adaptive Control Modulation).

Lorsque la station sol multi-antennes 102 selon l'invention comporte un dispositif de mise en oeuvre d'une boucle de contrôle de modulation adaptative ACM, la dynamique de la rampe de gain dégressif est coordonnée avec les caractéristiques dynamiques de la boucle de contrôle de modulation adaptative ACM.

Lorsque la station sol selon l'invention 102 est en fonctionnement, les signaux d'entrée se1(t), se2(t), ..., seP(t), reçus des antennes 112, 114, 116 au travers d'éventuelles chaînes Rx de réception RF pouvant amplifier et/ou transposer en fréquence er/ou numériser, sont d'abord normalisés grâce à un AGC sur chaque voie, puis filtrés par les filtres 162, 164, 166 pour isoler le signal d'intérêt à sommer sur chacune des voies.

Les signaux normalisés sn1(t), sn2(t), ..., snP(t) viennent ensuite nourrir la batterie des P-1 cross-corrélateurs complexes qui permet à la fois en cherchant les pics de corrélation de déduire la différence temporelle entre les signaux, et à travers l'argument des signaux de cross-corrélation de mesurer l'écart de phase entre les signaux.

Le signal se1(t) fourni en l'entrée 132 de la première voie (voie #1) est pris ici comme le signal de référence.

Afin de limiter la fréquence de fonctionnement de chaque cross-corrélateur 172, 174, chaque signal d'entrée desdits cross-corrélateurs peut être passé de manière optionnelle à travers une boucle de récupération fractionnelle d'horloge 202, 204, 206 pour les délais fractionnaires inférieurs à la durée d'un échantillon numérique en se fondant sur un algorithme de récupération de rythme NDA (en anglais Non Data-Aided) non assisté par les données, par exemple de type Gardner.

Ces mesures d'écart temporel et de phase vont contrôler les lignes à retard FIFOs 182, 184, 186 à décalage temporel configurable et les multiplieurs 192, 194, 196 afin d'appliquer les compensations nécessaires aux signaux avant d'opérer finalement leur sommation.

L'indication de qualité de réception permet au dispositif de gestion de diversité et de basculement 126 lorsqu'il détecte un écart de ladite qualité entre les deux signaux de réduire la contribution du signal le plus bruité pour des problèmes de qualité de bilan de liaison.

Ce qui est recherché n'est pas une indication absolue de la qualité du signal mais plutôt une indication portant sur la différence de qualité. De ce point de vue le niveau de corrélation entre les signaux constitue un parfait estimateur d'autant plus qu'il ne requiert aucune connaissance a priori du signal.

Lors d'une décision de basculement de lien ou handover entre un premier satellite S1 et un deuxième satellite S2 qui peut intervenir et provenir soit d'un organe du système satellitaire, différent de la station sol, ou soit de la station sol elle-même, en se fondant par exemple sur le dépassement d'un seuil d'élévation minimale, l'addition d'une antenne par le dispositif de combinaison 124 à diversité configurable n'est pas interrompue brutalement mais une rampe de diminution de gain progressive sur l'amplitude du signal en provenance de l'antenne à retirer est appliquée afin de limiter la perturbation d'une éventuelle boucle ACM utilisé dans la transmission Cette rampe est typiquement de l'ordre de quelques dixièmes de dB par période d'aller-retour RTT (en anglais Round Time Trip). Par exemple sur un satellite MEO et un RTT typique de 60ms, ce processus prend moins d'une seconde.

De façon symétrique lors de l'addition d'un nouveau signal et donc d'une nouvelle antenne en réception, cette addition de signal doit se faire progressivement afin d'éviter un écart de niveau important à l'entrée du dispositif de contrôle de gain AGC de la voie correspondante du dispositif de réception et de traitement 122 qui en saturant le dispositif AGC du démodulateur disposé en aval du dispositif de combinaison 124 pourrait produire une perte de signal momentanée induisant une perte de trafic.

Suivant la Figure 4, un processus typique 252 de gestion d'un basculement transparent unitaire d'une antenne depuis un premier un premier satellite de départ S1 vers un deuxième satellite de destination S2 est illustrée.

Lorsqu'une absence de signal de réception sur une antenne est détectée dans une première étape 254 en raison du fait que la corrélation n'opère plus avec un niveau satisfaisant, la voie associée incriminée est immédiatement retirée dans une deuxième étape 256 de l'addition effectuée par le dispositif de combinaison 124 afin d'éviter que ladite voie bruitée n'apporte un bruit supplémentaire.

Suite à une demande d'un basculement transparent unitaire d'une antenne en mode réception depuis un premier satellite S1 vers un deuxième satellite S2, l'exécution de ce basculement est activée dans une troisième étape 258, et dans une quatrième étape 260 une rampe de gain dégressif est appliquée sur la chaîne à retirer. Dans une cinquième étape 262, la qualité différentielle associée à ladite chaine à enlever est comparée à une valeur seuil prédéterminée, ici supposée égale à 5 dB et qui dans la pratique est matérialisé par un seuil minimum du niveau de corrélation,

Tant que la différence de qualité ne dépasse pas la valeur seuil, la diminution linéaire de gain par pas de gain continue d'être appliquée la répétition des quatrième et cinquième étapes 260, 262.

Lorsque la différence de qualité dépasse les 5 dB, la chaîne à retirer est complètement retirée de la sommation finale dans la deuxième étape 256.

L'antenne associée à la chaine retirée peut alors être repositionnée librement pour acquérir un nouveau satellite par exécution d'un pointage de l'antenne dans une sixième étape 264 et d'une boucle de ré-acquisition de la porteuse 266 (septième étape 268 et huitième étape 270). Quand l'acquisition de la porteuse, matérialisée par un niveau de corrélation suffisant, est atteinte, suivant une neuvième étape 272 la voie connectée à l'antenne et à sa chaine de réception RF est à nouveau incluse dans le processus de sommation finale du dispositif de combinaison à diversité.

Suivant la Figure 5, une station sol 302 selon l'invention, dérivée de la station sol 102 décrite dans la Figure 3, comprend en outre au moins deux voies d'émission 304, 306, aptes à être combinées et aux moins deux antennes directives mobiles 314, 316, aptes à fonctionner en mode émission et à pointer avec suivi vers un même satellite 320.

La Figure 5 illustre les contributions respectives 322, 324, apportées par les équipements d'émission 328 de la station sol 302 sur chacune des voies 304, 306, et par les trajets géométriques différenciés entre les antennes 314, 316, fonctionnant en mode d'émission de la station sol 302 et le satellite commun 320 pointé aux décalages temporels et en phase depuis les entrées des voies 304, 306, jusqu'au satellite commun 320 pointé.

De manière générale, à la fois pour les chaînes de réception et d'émission, dans leurs composantes RF et numériques, il convient de séparer les contributions en deux parties :

•- une première partie concernant la contribution interne au terminal provenant de la phase de démarrage aléatoire des oscillateurs locaux OLs ainsi que des délais induits notamment par la longueur des câbles,
•- une deuxième partie concernant la contribution provenant de la distance entre les antennes et le satellite.

Suivant la Figure 6 et une architecture modulaire générale de la station sol multi-antennes 302, les dispositifs plus spécifiques du mode émission de la station et leur agencement sont illustrés.

Ces dispositifs sont configurés pour permettre à la station sol d'émettre N porteuses à la même fréquence portant un même signal de communication, au travers de N antennes fonctionnant en mode émission et pointées vers le même satellite, et une réception par le satellite de N porteuses agrégées de manière cohérente.

Suivant la Figure 6, la station sol multi-antennes 302 comprend un dispositif de fourniture 354 d'un même signal source, un dispositif d'émission et de traitement 356 pour générer sur N voies un front d'onde à destination d'un même satellite 320, et un dispositif de gestion de diversité en émission 358.

Le dispositif de fourniture 354 d'un même signal source à émettre est configuré pour fournir le signal source partagé en un nombre entier N, inférieur ou égal à P, de bornes de fourniture $362_1$, $362_2$, ..., $362_N$.

Le dispositif d'émission et de traitement 356, configuré pour générer sur N voies d'émission un front d'onde à destination du satellite 320, pointé et en mode réception, pris parmi le premier satellite S1 et le deuxième satellite S2, est connecté en entrée aux N bornes de fourniture $362_1$, $362_2$, ..., $362_N$ du dispositif de fourniture 354.

Le dispositif d'émission et de traitement 356 comporte N bornes de sortie d'émission $372_1$, $372_2$, ..., $372_N$ connectées à N antennes parmi les P antennes d'émission, pour délivrer en parallèle N signaux traités de sortie, décalés entre eux temporellement et en phase de sorte que les fronts d'ondes de chaque antenne sont agrégés en réception du satellite commun 320.

Le dispositif de gestion de diversité en émission 358 est configuré pour contrôler le dispositif d'émission et de traitement multivoies 356, en déterminant et en lui envoyant des commandes de décalage temporel et en phase des N signaux émis en sortie du dispositif d'émission et de traitement multivoies.

Les commandes de décalage temporel et en phase des N signaux émis en sortie du dispositif d'émission et de traitement multivoies sont élaborées en fonction de mesures de calibration des chaînes émission, d'estimations des contributions internes au terminal en réception et des contributions liées à la différence de distance entre les voies d'émission.

Ainsi, N voies d'émission différenciées sont créées à partir d'un même signal, en insérant un délai différent à chaque sortie ainsi qu'une correction en phase et en amplitude, ce qui permet de générer un front d'onde à destination du satellite commun, destinataire en mode émission, le front d'onde étant composé des fronts d'ondes de chaque antenne qui se sont agrégées de façon constructive au point de réception antenne du satellite commun.

Suivant la Figure 7, la station sol multi-antennes 302 des Figures 5 et 6 comprend une chaîne de calibration rétroactive 392 des chaines RF émission Tx $394_1$, $394_2$, ..., $394_N$

La chaine de calibration rétroactive 392 des chaines RF émission est connectée aux ports d'entrée $396_1$, $396_2$, ..., $396_N$ des N antennes en mode émission au travers de N coupleurs de prélèvement $398_1$, $398_2$, ..., $398_N$, de câbles de connexion $402_1$, $402_2$, ...$402_N$ et d'un commutateur N:1 404 de sélection de chaine RF d'émission.

Les coupleurs de prélèvement $398_1$, $398_2$, ..., $398_N$, les câbles de connexion $402_1$, $402_2$, ...$402_N$ et le commutateur N:1 404 sont calibrés pour permettre à un estimateur 408 des contributions internes de chaînes RF d'émission de déterminer les contributions internes des chaînes d'émission de la station sol en termes d'écarts différentiels temporels et en phase. Ces estimations sont effectuées à partir des mesures de calibration des chaines RF d'émission rapatriées par la chaine de calibration rétroactive 392.

La chaine de calibration rétroactive 392 permet ainsi de mesurer l'écart de phase et le délai différentiel entre deux chaînes RF d'émission sélectionnées au choix au travers d'une séquence de commandes idoines envoyées par l'estimateur 408 au commutateur 404.

Les contributions internes à la station sol 302 en émission en termes d'écarts en phase et temporels, désignés respectivement par $\Delta\varphi_{TX\_ter}$ et $\Delta t_{TX\_ter}$, sont ainsi estimées à l'aide de la chaîne de calibration rétroactive 392. Ces deux valeurs sont déduites par l'envoi d'un signal de référence sur chaque chaîne RF d'émission $394_1$, $394_2$, ..., $394_N$ et d'une estimation du déphasage et du délai, l'estimation utilisant par exemple le même type de dispositif d'estimation que celui préféré à base de corrélateur pour le mode réception des antennes.

Ainsi les différences en phase des oscillateurs locaux OLs des chaînes d'émission RF peuvent être prises en compte pour déterminer les écarts de consigne des voies d'émission en vue d'obtenir une agrégation cohérente au niveau du satellite récepteur des fronts d'ondes émis par les antennes en mode d'émission.

Il est à remarquer que cette chaîne de calibration rétroactive 392 peut être avantageusement réutilisée pour une fonction de pré-distorsion adaptative des unités BUC (en anglais Block Up-Converter) d'amplification et de conversion fréquentielle des chaines RF d'émission dans la mesure où cette chaine 392 permet d'échantillonner le signal en sortie de la chaîne d'amplification.

S'agissant de l'estimation de la contribution provenant des différences des distances entre les antennes et le satellite commun récepteur pointé, les antennes 314, 316, fonctionnant en mode émission vers ledit satellite commun sont supposées fonctionner également en mode réception vis-à-vis du même satellite commun.

Pour cette estimation de la deuxième partie des contributions, les mesures de phase des chaînes de réception Rx ne peuvent être reprises telles quelles. En effet, deux chaînes de réception RF quelconques, prises parmi l'ensemble des chaînes RF de réception Rx, étant indépendantes, même si ces deux chaînes RF Rx possèdent une même référence d'horloge, la phase absolue ne peut être maîtrisée. Il faut donc repartir de la différence de trajet donnée par le décalage temporel des signaux reçus par les antennes. La partie phase est, quant à elle, à la fois affectée par la différence de phase relative entre les oscillateurs locaux OLs des deux chaînes RF et par la différence de trajets du front d'onde, i.e. la différence des deux trajets reçus correspondants.

Les contributions internes de la station sol en réception et en termes d'écarts de phase et temporels étant respectivement désignées par $\Delta\varphi_{RX\_ter}$ et $\Delta t_{RX\_ter}$ et les contributions liées à la différences de distances entre les deux antennes et le satellite sur la voie aller descendante étant respectivement désignées par $\Delta\varphi_{sat\text{-}ter}$ et $\Delta t_{sat\text{-}ter}$, une première relation

$$\Delta\varphi_{RX\_ter} = \Delta t_{RX\_ter} \cdot c + \Delta\varphi_{RX\_LOs}$$

est satisfaite dans laquelle $\Delta\varphi_{RX\_LOs}$ désigne la différence de phases initiales entre les oscillateurs locaux OLs des deux chaînes de réception et $\underline{c}$ désigne la célérité de la lumière dans le vide.

Pour estimer l'écart temporel $\Delta t_{RX\_ter}$, une méthode est par exemple d'utiliser des unités d'amplification faible bruit LNBs (en anglais Low Noise Blocks) aussi proches que possibles ou calibrés ainsi que des longueurs de câble calibrées.

Il est à remarquer que dans le cas où la chaîne d'acquisition en réception est intégré dans l'unité d'amplification faible bruit LNB et que le signal sort numérisé, il n'y a plus de contribution du câble.

Les mesures d'écart de temps effectuées à la réception étant désignés par $\Delta t_{RX\_mes}$ et les contributions liées à la différence de distance entre les antennes et le satellite sur la voie retour depuis les antennes en termes d'écarts de phase et temporel étant respectivement désignés par $\Delta\varphi_{ter-sat}$ et $\Delta_{ter-sat}$, les estimations de phase et de temps servant de compensation pour le trajet depuis l'antenne vers satellite à l'émission peuvent alors être estimées suivant l'expression :

$$\Delta t_{ter-sat} = \Delta t_{RX\_ter} - \Delta t_{RX\_mes} \ \text{ et } \ \Delta\varphi_{ter-sat} = \Delta t_{ter-sat}.c$$

Dans cette approche, on se sert de la mesure dans le passé de la différence temporelle pour prédire celle de l'émission. Si l'on cherche à améliorer la qualité de ces prédictions une approche de type autorégressive peut être utilisée, cette approche étant fondée par exemple sur un algorithme GARCH (en anglais Generalized AutoRegressive Conditional Heteroskedasticity) glissant, ou sur un filtrage de Kalman ou encore sur des éphémérides.

La compensation à l'émission de façon simplifiée se calcule alors comme suit : $\Delta t_{TX\_comp} = -\Delta t_{RX\_ter} - \Delta t_{ter-sat}$ et $\Delta\varphi_{TX\_comp} = -\Delta\varphi_{RX\_ter} - \Delta\varphi_{ter-sat}$

Suivant la Figure 8, le dispositif multivoies d'émission et de traitement 356, et le dispositif de gestion de diversité en émission 358 sont agencés et configurés pour mettre en oeuvre une compensation en boucle fermée 452 des écarts temporels et en phases des N voies d'émission d'une configuration de diversité d'émission. Ici, sur la Figure 8 par souci de simplification de l'illustration, un schéma limité à deux voies d'émission et deux antennes 314, 316 est fourni. Ce schéma peut être facilement étendu à un nombre N d'antennes et de voies d'émission supérieur ou égal à 3.

Les N antennes utilisées en diversité d'émission sur le satellite pointé 320, ici les deux antennes 314, 316, sont au même moment des antennes en diversité de réception pointant sur le même satellite 320, et envoient N signaux identiques, ici deux signaux sur la Figure 8, décalés entre eux temporellement et en phase pour générer un front d'onde cohérent au niveau du satellite pointé.

Le dispositif de gestion de diversité en émission 358 reçoit une mesure de qualité de l'agrégation des porteuses émises par les N antennes en mode émission 314, 316.

Cette mesure de qualité de l'agrégation des porteuses a été effectuée et déterminée au préalable en termes de différences temporelle et de phase par un récepteur 462 d'une station sol externe distante 464 et retransmise à la station sol d'émission 302 via un canal de transmission 466 de voie retour terrestre. La station sol d'émission 302 corrige au travers du dispositif de gestion de diversité en émission 358 les consignes de décalage temporel et de phase, fournies au dispositif multivoies d'émission et de traitement 356, à partir différences temporelles et de phase mesurées par la station sol externe 464.

En variante, le système satellitaire est bidirectionnel et comporte un lien de retour par le même satellite pointé. Dans ce cas, mesure de qualité de l'agrégation des porteuses, déterminée au préalable en termes de différences temporelle et de phase par le récepteur de la station sol externe distante, est retransmise via le canal symétrique de voie retour du satellite pointé

Cette configuration de compensation en boucle fermée permet de tester la qualité de la compensation et d'éventuellement de la corriger en y appliquant une ou plusieurs corrections afin de garantir en permanence un niveau de qualité requis.

Suivant la Figure 8 et un premier mode de réalisation, les N signaux identiques, ici les deux signaux 454, 456, décalés entre eux temporellement et en phase pour générer un front d'onde cohérent au niveau du satellite pointé, sont des signaux d'une séquence identique de référence mais à des fréquences différentes, et les signaux différentiels du récepteur 462 de la station sol externe 464 sont déterminés par corrélation.

Le récepteur externe 462 de la station sol externe 464 reçoit , ici les deux signaux à des fréquences porteuses différentes. En effectuant une corrélation entre ces deux signaux, le récepteur externe 464 est à même de déterminer une différence en termes de temps d'arrivée et d'écart de phase, et de la fournir ensuite à la station sol 302 en mode émission via la voie retour 466 de rétroaction de la boucle de compensation 452.

Le dispositif de gestion de diversité en émission 358 de la station sol selon l'invention est configuré pour comparer ce résultat aux consignes de décalage utilisées pour déduire de la comparaison une correction à apporter aux futurs consignes de décalages.

En variante et suivant un deuxième mode de réalisation, les N signaux identiques, décalés entre eux temporellement et en phase pour générer un front d'onde cohérent au niveau du satellite pointé, sont des signaux obtenus à partir de répliques d'un même signal de trafic, et les signaux différentiels du récepteur de la station sol externe sont déterminés par corrélation du signal reçu retransmis par le satellite.

Ce deuxième procédé remplit le même objectif que le premier procédé de la Figure 8, sans nécessiter un débrayage de l'agrégation des porteuses émises en mode de trafic afin d'effectuer la ou les mesures requises par la boucle de compensation.

Si l'on procède à la mesure d'auto-corrélation du signal reçu qui est le résultat de l'agrégat des signaux provenant des différentes antennes, le défaut de compensation en temps et en phase provoque une diminution du pic de corrélation et l'apparition de pics secondaires.

Cet écart de pic correspond au double du retard entre les signaux et la phase du signal d'auto-corrélation indique l'écart de phase entre les signaux comparés.

Le système et le procédé de calibration dynamique sont prévus pour être activés et fonctionner au choix de manière permanente, de manière répétée périodiquement ou a-périodiquement, ou sur demande au travers de l'envoi de télécommandes depuis le sol par exemple.

De manière avantageuse, la station sol multi-antennes selon l'invention permet d'additionner de manière cohérente plusieurs répliques reçues d'un même signal, une remise en cohérence des répliques étant réalisée à partir de l'exploitation de mesures d'écarts temporels et en phase entre voies. Les mesures des écarts temporels et en phase entre voies sont réalisées de préférence par des cross-corrélateurs. L'agrégation cohérente de deux porteuses permet d'atteindre jusqu'à 3 dB sur le rapport signal à bruit et de manière générale l'agrégation cohérente de N porteuses reçues permet d'atteindre $10.\log(N)$ dB d'amélioration du rapport de signal à bruit.

De manière avantageuse, l'architecture et la configuration de la station sol selon l'invention permettent une gestion intégrée harmonieuse d'un basculement de lien inter-satellites et d'un mécanisme de contrôle ACM par une coupure progressive d'une porteuse associé à une antenne lors de son retrait d'un satellite pendant le basculement et par la capacité à aligner des porteuses issues d'un même satellite et/ou de deux satellites différents.

De manière avantageuse, la station sol multi-antennes selon l'invention permet la mise en cohérence d'un front d'onde à l'émission pour une réception par un même satellite de plusieurs répliques d'un même satellite. L'agrégation cohérente de deux porteuses émises permet d'atteindre jusqu'à 6 dB de gain de puissance rayonnée émise à l'emplacement du satellite et de manière générale l'agrégation cohérente de N porteuses émises permet d'atteindre $20.\log(N)$ dB de gain de puissance rayonnée émise à l'emplacement du satellite.

L'invention permet l'addition cohérente de plusieurs répliques d'un même signal que celui-ci provienne ou non d'un même satellite, soit ou non à la même fréquence/polarisation grâce au réalignement en phase/fréquence et temps des différentes répliques sur la base d'une bande de cross-corrélateurs.

La mesure de différence de trajet à la réception, associée à une connaissance des éphémérides des satellites est utilisée pour générer une prédiction du décalage de phase et de temps à appliquer à l'émission afin d'émettre un front d'onde cohérent entre les antennes.

L'invention permet aussi la gestion du hand-over grâce aux mesures de qualité de signal fournies par les cross-corrélateurs et aux information d'éphémérides. L'utilisation d'une procédure de rupture du lien avant la mise en oeuvre du hand-over permet de ménager les boucles adaptatives (ACM) aussi bien à l'émission qu'à la réception.

**Revendications**

1. Station sol multi-antennes d'un système satellitaire de télécommunications (14) utilisant une constellation de satellites défilants (32, 34; 72, 74),

   la station sol comprenant :

   •- un nombre entier P, supérieur ou égal à deux, d'antennes (22, 24 ; 62, 64, 66 ; 112, 114,116) aptes en réception à suivre chacune, pendant une même période de temps prédéterminée, un satellite (32, 34 ; 72, 74) pris parmi un premier satellite (32 ; 72) S1 d'origine et un deuxième satellite (34 ; 74) S2 de destination, tous deux en visibilité pendant ladite période,
   •- un dispositif de réception et de traitement multivoies (122), à P bornes d'entrée (132, 134, 136), connectées respectivement à P bornes de sortie des P antennes (112, 114, 116), pour recevoir en entrée dudit dispositif et de traitement P signaux antennaires reçus et fournis en sortie desdites antennes de réception, et à P bornes de sortie (142, 144, 146) pour délivrer en parallèle P signaux traités de sortie, alignés entre eux temporellement et en phase, obtenus respectivement à partir des P P signaux antennaires reçus, et
   •- un dispositif de combinaison à diversité configurable (124), connecté en entrée au dispositif de réception et de traitement multivoies (122), pour combiner une partie ou la totalité des signaux traités de sortie en fonction d'une consigne de sélection des signaux traités de sortie et traités à combiner, et

•- un dispositif de gestion de diversité et de basculement transparent (126) d'un lien de communication de réception depuis le premier satellite S1 d'origine vers le deuxième satellite S2 de destination,

la station sol étant **caractérisée en ce que**

le dispositif de gestion de diversité et de basculement transparent (126) est configuré pour :

•- gérer et coordonner l'exécution d'un basculement du lien de communication depuis le premier satellite (32 ; 72) S1 d'origine vers le deuxième satellite (34 ; 74) S2 de destination, ledit basculement du lien de communication étant constitué par une succession d'un nombre k, supérieur ou égal à 2, de basculements Bi transparents et unitaires d'antennes, sélectionnées selon une séquence prédéterminée, chaque basculement Bi transparent et unitaire d'antenne (44, 46 ; 84, 86, 88) étant un basculement d'une antenne (22, 24 ; 62, 64, 66) depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2, et

•- pendant chaque basculement transparent et unitaire Bi (32, 34 ; 84, 86, 88), contrôler les antennes (22, 24 ; 62, 64, 66), le dispositif de réception et de traitement multivoies ainsi que le dispositif de combinaison à diversité configurable en déterminant et en leur envoyant respectivement :

•* des commandes de pointage d'acquisition des satellites, et

•* des commandes d'alignement temporel et en phase des P signaux reçus en entrée du dispositif de réception et de traitement multivoies élaborées en fonction de mesures d'écarts temporels et en phase de P-1 signaux reçus en entrée par rapport au signal reçu en entrée pris comme signal de référence, et

•* une consigne de sélection des signaux traités de sortie à combiner en fonction de la planification du basculement de la première configuration de diversité C1(i) vers la deuxième configuration de diversité C2(i) et en fonction de mesures de qualités des signaux reçus en entrée du dispositif de réception et de traitement.

2. Station sol multi-antennes selon la revendication 1, dans laquelle

•- le nombre entier P d'antennes de réception (22, 24 ; 62, 64, 66 ; 112, 114, 116), aptes à pointer et à suivre chacune, pendant une même période de temps prédéterminée, un satellite pris parmi un premier satellite S1 (32 ; 72) et un deuxième satellite S2 (34 : 74), et de voies du dispositif de réception et de traitement (122) est supérieur ou égal à trois, et de préférence égal à trois, et

•- les première et deuxième configurations C1(i), C2(i) de diversité en réception de chaque basculement transparent unitaire Bi sont chacune des configurations dans lesquelles la diversité en réception est mise en oeuvre sur les deux premier et deuxième satellites S1, S2 (32, 34 ; 72, 74), et

•- pendant chaque basculement transparent unitaire Bi et pendant le basculement du lien de communication, une diversité en réception sur au moins deux antennes (22, 24 ; 62,64, 66 ; 112, 114, 116) est assurée en permanence.

3. Station sol multi-antennes selon l'une quelconque des revendications 1 à 2, dans lequel

•- le dispositif de réception et de traitement multivoies (122) est configuré pour :

•* recevoir, normaliser et filtrer sur P voies distinctes et séparées, les P signaux antennaires reçus fournis en sortie par les P antennes (112, 114, 116), en P signaux normalisés et filtrés, ensuite

•* estimer des écarts temporels, des écarts de phase et des écarts de qualité entre un signal normalisé et filtré de référence, pris parmi les P signaux normalisés et filtrés, et les P-1 signaux normalisés et filtrés restants, et fournir lesdits écarts au dispositif de gestion et de basculement ; puis

•* pour chaque voie, appliquer une compensation temporelle et une compensation de phase au signal filtré associé à la voie à partir des commandes d'alignement temporel et en phase correspondantes, élaborées et envoyées par le dispositif de gestion de diversité et de basculement.

4. Station sol multi-antennes selon l'une quelconque des revendications 1 à 3, dans lequel le dispositif de réception et de traitement multivoies (122) comprend en outre :

•- une batterie de P dispositifs de contrôle automatique de gain AGC (152, 154, 146) pour normaliser les signaux reçus en entrée du dispositif de réception et de traitement multivoies (122), et
•- une batterie de P filtres passe bande (162, 164, 166) pour filtrer les signaux normalisés, par exemple des filtres SRRC.

5. Station sol multi-antennes selon l'une quelconque des revendications 1 à 4, dans lequel le dispositif de réception et de traitement multivoies (122) comprend en outre :
une batterie de P-1 cross-corrélateurs complexes (172, 174) pour estimer des écarts temporels, des écarts de phase et des écarts de qualité entre un signal normalisé et filtré de référence, pris parmi les P signaux normalisés et filtrés, et les P-1 signaux normalisés et filtrés restants, et fournir lesdits écarts au dispositif de gestion et de basculement, en cherchant pour chaque cross-corrélateur (172, 174) un pic de corrélation qui permet de déduire l'écart temporel entre les signaux comparés, en exploitant l'argument du signal cross-corrélé pour déterminer l'écart de phase entre les signaux comparés, et en exploitant le niveau de corrélation entre les signaux comparés pour déterminer une indication de différence de qualité.

6. Station sol multi-antennes selon l'une quelconque des revendications 1 à 5, dans lequel le dispositif de réception et de traitement multivoies (122) comprend en outre :
une batterie de P de lignes à retard FIFOs (182, 184, 186) à décalage temporel programmable, connectée en aval à une batterie de multiplieurs (192, 194, 196) à compensation de phase programmable, les multiplieurs (192, 194, 196) permettant les compensations de phase étant connectés en entrée au dispositif de combinaison à diversité (124).

7. Station sol multi-antennes selon l'une quelconque des revendications 1 à 6, dans lequel
le dispositif de réception et de traitement multivoies (122) est configuré pour ajuster sélectivement le gain de chacune des voies de sorte à pouvoir atténuer de manière progressive le niveau de sortie du signal de sortie d'une cherche d'une chaine de sortie que l'on souhaite retirer de la combinaison à diversité, et
le dispositif de gestion de diversité et de basculement (126) est configuré lors d'un basculement d'antenne du premier satellite (32 ; 72) au deuxième satellite (34 ; 74) ; pour :

commander une rampe de gain dégressif sur la chaîne à retirer par le dispositif de combinaison à diversité, et lorsque la qualité différentielle a dépassé un seuil prédéterminé commander au dispositif de combinaison à diversité (124) de retirer ladite chaine.

8. Station sol multi-antennes selon la revendication 7, comprenant un démodulateur connecté en sortie du dispositif de combinaison à diversité et un dispositif de mise en oeuvre d'une boucle de contrôle de modulation adaptative ACM, et
dans laquelle la dynamique de la rampe de gain dégressif est coordonnée avec les caractéristiques dynamiques de la boucle de contrôle de modulation adaptative ACM.

9. Station sol multi-antennes selon l'une quelconque des revendications 1 à 8, dans lequel
le dispositif de réception et de traitement multivoies (122) est configuré pour ajuster sélectivement le gain de chacune des voies de sorte à pouvoir augmenter de manière progressive le niveau de sortie du signal de sortie d'une chaine de sortie que l'on souhaite ajouter dans la combinaison à diversité, et
le dispositif de gestion de diversité et de basculement (126) est configuré pour, lors d'un basculement unitaire d'antenne du premier satellite (32 ; 72) au deuxième satellite (34 ; 74) et de la phase de rattachement de l'antenne au satellite de destination,
commander une rampe de gain progressive sur la chaîne à ajouter par le dispositif de combinaison à diversité.

10. Station sol multi-antennes selon l'une quelconque des revendications 1 à 9, dans lequel
le dispositif de gestion de diversité et de basculement (126) est configuré sur détection d'une absence de signal sur une chaine active dans la combinaison pour envoyer une commande de retrait au dispositif de combinaison à diversité (124).

11. Station sol multi-antennes selon l'une quelconque des revendications 1 à 10, comprenant

•- un dispositif de fourniture (354) d'un même signal source à émettre en un nombre entier N, inférieur ou égal à P, de bornes de fourniture ($362_1$, $362_2$, $362_N$), et
•- un dispositif d'émission et de traitement (356) pour générer sur N voies un front d'onde à destination d'un satellite, pris parmi le premier satellite S1 (32 ; 72) et le deuxième satellite S2 (34 ; 74), connecté en entrée aux N bornes de fourniture, et ayant N bornes de sortie d'émission connectées à N antennes parmi les P antennes d'émission ou égal à P, pour délivrer en parallèle N signaux traités de sortie, décalés entre eux temporellement et en phase de sorte que les fronts d'ondes de chaque antenne sont agrégés en réception satellite, et

•- un dispositif de gestion de diversité en émission (358) configuré pour contrôler le dispositif d'émission et de traitement multivoies (356) en déterminant et en lui envoyant des commandes de décalage temporel et en phase des N signaux émis en sortie du dispositif d'émission et de traitement multivoies (356) élaborées en fonction de mesures de calibration des chaînes émission, d'estimations des contributions internes au terminal en réception et des contributions liées à la différence de distance entre les voies d'émission.

12. Station sol multi-antennes selon la revendication 11, comprenant une chaîne de calibration rétroactive (392) des chaines émission ($394_1$, $394_2$, $394_N$) connectées aux ports d'entrée ($396_1$, $396_2$, $396_N$) des N antennes en mode émission au travers de coupleurs de prélèvement ($398_1$, $398_2$, $398_N$), de câbles de connexion ($402_1$, $402_2$, $402_N$) et d'un commutateur N :1 de sélection (404) de chaine, calibrés pour les contributions internes de chaînes d'émission de la station en termes d'écarts différentiels temporels et en phase.

13. Station sol multi-antennes selon l'une quelconque des revendications 11 à 12, dans laquelle le dispositif multivoies d'émission et de traitement (356), et le dispositif de gestion de diversité en émission (358) sont agencés et configurés pour mettre en oeuvre une compensation en boucle fermée (452) des écarts temporels et en phases des N voies d'émission d'une configuration de diversité d'émission dans laquelle
les N antennes (454, 456) utilisées en diversité d'émission sur le satellite pointé (320) sont au même moment des antennes en diversité de réception pointant sur le même satellite (320), et envoient N signaux identiques décalés entre eux temporellement et en phase pour générer un front d'onde cohérent au niveau du satellite pointé (320), et le dispositif de gestion de diversité en émission (358) reçoit une mesure de qualité de l'agrégation des porteuses émises par les N antennes en mode, la mesure de qualité de l'agrégation des porteuses ayant été déterminée en termes de différences temporelle et de phase par un récepteur (462) d'une station sol externe distante (464) et retransmise via un canal de transmission de voie retour terrestre (466) ou via un canal symétrique de voie retour du satellite pointé (320), et corrige les consignes de décalage temporel et de phase, fournies au dispositif multivoies d'émission et de traitement (356), à partir des différences temporelles et de phase mesurées par la station sol externe (464).

14. Station sol multi-antennes selon la revendication 13, dans laquelle

•- les N signaux identiques, décalés entre eux temporellement et en phase pour générer un front d'onde cohérent au niveau du satellite pointé (320), sont des signaux d'une séquence identique de référence, et les signaux différentiels du récepteur (462) de la station sol externe (464)sont déterminés par corrélation, ou
•- les N signaux identiques, décalés entre eux temporellement et en phase pour générer un front d'onde cohérent au niveau du satellite pointé, sont des signaux obtenus à partir de répliques d'un même signal de trafic, et les signaux différentiels du récepteur de la station sol externe sont déterminés par corrélation du signal reçu retransmis par le satellite (320).

15. Procédé de basculement transparent d'un lien de communication dans un mode réception ou un mode dual réception/émission depuis un premier satellite S1 d'origine vers un deuxième satellite S2 de destination,
le procédé de basculement étant mis en oeuvre par une station sol comprenant :

•- un nombre entier P, supérieur ou égal à deux, d'antennes (22, 24 ; 62, 64, 66 ; 112, 114, 116) aptes en réception à suivre chacune, pendant une même période de temps prédéterminée, un satellite (32, 34 ; 72, 74) pris parmi un premier satellite S1 (32 ; 72) d'origine et un deuxième satellite S2 (34 ; 74) de destination, tous deux en visibilité pendant ladite période,
•- un dispositif de réception et de traitement multivoies (122), à P bornes d'entrée (132, 14, 136), connectées respectivement à P bornes de sortie des P antennes (112, 114, 116), pour recevoir en entrée dudit dispositif et de traitement P signaux antennaires reçus et fournis en sortie desdites antennes de réception, et à P bornes de sortie (142, 144, 146) pour délivrer en parallèle P signaux traités de sortie, alignés entre eux temporellement et en phase, obtenus respectivement à partir des P P signaux antennaires reçus, et
•- un dispositif de combinaison à diversité configurable (124), connecté en entrée au dispositif de réception et de traitement multivoies (122), pour combiner une partie ou la totalité des signaux traités de sortie en fonction d'une consigne de sélection des signaux traités de sortie et traités à combiner, et
•- un dispositif de gestion de diversité et de basculement transparent (126) du lien de communication,

le procédé de basculement du lien de communication étant **caractérisé en ce que**

le basculement du lien de communication est constitué par une succession d'un nombre k, supérieur ou égal à 2, de basculements Bi transparents et unitaires d'antennes, sélectionnées selon une séquence prédéterminée, chaque basculement Bi transparent et unitaire d'antenne (44, 46 ; 84, 86, 88) étant un basculement d'une antenne (22, 24 ; 62, 64, 66) depuis une première configuration de diversité en réception opérationnelle C1(i) dans laquelle l'antenne sélectionnée est pointée avec suivi sur le premier satellite S1, vers une deuxième configuration de diversité en réception opérationnelle C2(i) dans laquelle l'antenne sélectionnée est pointée avec suivi sur le deuxième satellite S2, l'une au moins des première et deuxième configurations C1(i), C2(i) de diversité en réception étant une configuration dans laquelle la diversité en réception est mise en oeuvre sur les deux premier et deuxième satellite S1, S2.

16. Procédé de basculement transparent d'un lien de communication selon la revendication 15, dans lequel chaque basculement transparent et unitaire Bi (44, 46 ; 84, 86, 88), comprend des étapes de contrôle du dispositif de réception et de traitement multivoies ainsi que du dispositif de combinaison à diversité configurable en déterminant et en leur envoyant respectivement :

•* des commandes de pointage d'acquisition des satellites, et
•* des commandes d'alignement temporel et en phase des P signaux reçus en entrée du dispositif de réception et de traitement multivoies élaborées en fonction de mesures d'écarts temporels et en phase de P-1 signaux reçus en entrée par rapport au signal reçu en entrée pris comme signal de référence, et
•* une consigne de sélection des signaux traités de sortie à combiner en fonction de la planification du basculement de la première configuration de diversité C1 vers la deuxième configuration de diversité C2 et en fonction de mesures de qualités des signaux reçus en entrée du dispositif de réception et de traitement,

les étapes de contrôle étant mises en oeuvre par le dispositif de gestion de diversité et de basculement transparent du lien de communication.


## Patentansprüche

1. Multiantennen-Bodenstation eines Telekommunikationssatellitensystems (14), das eine Konstellation von passierenden Satelliten (32, 34; 72, 74) benutzt,
wobei die Bodenstation Folgendes umfasst:

- eine ganze Zahl P, gleich oder größer als zwei, von Antennen (22, 24; 62, 64, 66; 112, 114, 116), die beim Empfangen jeweils, während einer selben vorbestimmten Zeitperiode, einen Satelliten (32, 34; 72, 74) aus einem ersten Ausgangssatelliten (32; 72) S1 und einem zweiten Zielsatelliten (34; 74) S2 verfolgen können, die während der Periode beide sichtbar sind,
- ein Multikanal-Empfangs- und -Verarbeitungsgerät (122) mit P Eingangsanschlüssen (132, 134, 136), die jeweils mit P Ausgangsanschlüssen der P Antennen (112, 114, 116) verbunden sind, um am Eingang des Empfangs- und Verarbeitungsgeräts, P Antennensignale zu empfangen, empfangen und angelegt als Ausgang der Empfangsantennen, und mit P Ausgangsanschlüssen (142, 144, 146) zum parallelen Zuführen von P verarbeiteten Ausgangssignalen, die zeitlich und phasenmäßig aufeinander ausgerichtet sind, jeweils erhalten von den P empfangenen Antennensignalen, und
- ein konfigurierbares Diversity-Kombinationsgerät (124), am Eingang verbunden mit dem Multikanal-Empfangs- und -Verarbeitungsgerät (122), zum Kombinieren aller oder einiger der verarbeiteten Ausgangssignale in Abhängigkeit von einer Anweisung zum Auswählen der verarbeiteten Ausgangssignale und der zu kombinierenden verarbeiteten Signale, und
- ein Gerät für Diversity-Management und transparente Umschaltung (126) einer Empfangskommunikationsverbindung vom ersten Ausgangssatelliten S1 auf den zweiten Zielsatelliten S2,

wobei die Bodenstation **dadurch gekennzeichnet ist, dass**
das Gerät für Diversity-Management und transparente Umschaltung (126) konfiguriert ist zum:

- Verwalten und Koordinieren der Ausführung einer Umschaltung der Kommunikationsverbindung vom ersten Ausgangssatelliten (32; 72) S1 auf den zweiten Zielsatelliten (34; 74) S2, wobei das Umschalten der Kommunikationsverbindung durch eine Folge einer Anzahl k von gleich oder größer als 2, von transparenten und einheitlichen Antennenumschaltungen Bi gebildet wird, ausgewählt gemäß einer vorbestimmten Sequenz, wobei jede transparente und einheitliche Antennenumschaltung Bi (44, 46; 84, 86, 88) eine Umschaltung einer Antenne (22, 24; 62, 64, 66) von einer ersten betrieblichen Empfangs-Diversity-Konfiguration C1(i), in der die gewählte Antenne mit Verfolgung auf den ersten Satelliten S1 gerichtet ist, in eine zweite betriebliche Empfangs-Diversity-Konfiguration C2(i) ist, in der die gewählte Antenne mit Verfolgung auf den zweiten Satelliten S2 gerichtet ist, wobei die erste und/oder die zweite Empfangs-Diversity-Konfiguration C1(i), C2(i) eine Konfiguration ist, in der die Empfangs-Diversity auf dem ersten und zweiten Satelliten S1, S2 implementiert wird, und
- Steuern, bei jeder transparenten und einheitlichen Umschaltung Bi (32, 34; 84, 86, 88), der Antennen (22, 24; 62, 64, 66), des Multikanal-Empfangs- und - Verarbeitungsgeräts sowie des konfigurierbaren Diversity-Kombinationsgeräts durch Bestimmen und jeweiligen Senden zu diesem:

　　　　* von Satellitenanpeilungsbefehlen, und
　　　　* zeitlichen und phasenmäßigen Ausrichtungsbefehlen der am Eingang des Multikanal-Empfangs- und -Verarbeitungsgerät empfangenen P Signale, entwickelt in Abhängigkeit von Zeit- und Phasenversatzmesswerten von P-1 am Eingang empfangenen Signalen in Bezug auf das am Eingang empfangene Signal als Referenzsignal genommen, und
　　　　* eine Anweisung zum Auswählen der zu kombinierenden verarbeiteten Ausgangssignale in Abhängigkeit von der Planung der Umschaltung der ersten Diversity-Konfigurations C1(i) in die zweite Diversity-Konfiguration C2(i) und in Abhängigkeit von Messwerten der Qualität der am Eingang des Empfangs- und Verarbeitungsgeräts empfangenen Signale.

**2.** Multiantennen-Bodenstation nach Anspruch 1, bei der

- die ganzzahlige Anzahl P von Empfangsantennen (22, 24; 62, 64, 66; 112, 114, 116), die jeweils während einer selben vorbestimmten Zeitperiode auf einen Satelliten, genommen aus einem ersten Satelliten S1 (32; 72) und einem zweiten Satelliten S2 (34; 74), gerichtet sein und ihn verfolgen können, und mit Kanälen des Empfangs- und Verarbeitungsgeräts (122), von gleich oder größer als drei, vorzugsweise gleich drei, und
- die erste und zweite Empfangs-Diversity-Konfiguration C1(i), C2(i) von jeder transparenten einheitlichen Umschaltung Bi jeweils Konfigurationen sind, in denen die Empfangs-Diversity auf den zwei ersten und zweiten Satelliten S1, S2 (32, 34; 72, 74) implementiert wird, und
- bei jeder transparenten einheitlichen Umschaltung Bi und bei jeder Umschaltung der Kommunikationsverbindung, eine Empfangs-Diversity auf wenigstens zwei Antennen (22, 24; 62, 64, 66; 112, 114, 116) permanent gewährleistet wird.

**3.** Multiantennen-Bodenstation nach einem der Ansprüche 1 bis 2, bei der

- das Multikanal-Empfangs- und -Verarbeitungsgerät (122) konfiguriert ist zum:

　　　　* Empfangen, Normalisieren und Filtern auf P unterscheidbaren und getrennten Kanälen, der P empfangenen Antennensignale, angelegt am Ausgang durch die P Antennen (112, 114, 116), als P normalisierte und gefilterte Signale, dann
　　　　* Schätzen von zeitlichen Abweichungen, Phasenabweichungen und Qualitätsabweichungen zwischen einem normalisierten und gefilterten Referenzsignal, genommen aus den P normalisierten und gefilterten Signalen, und den P-1 normalisierten und gefilterten restlichen Signalen, und Zuführen der Abweichungen zu dem Management- und Umschaltgerät; dann
　　　　* Anwenden, für jeden Kanal, einer zeitlichen Kompensation und einer Phasenkompensation auf das mit dem Kanal assoziierte gefilterte Signal auf der Basis der entsprechenden zeitlichen und phasenmäßigen Ausrichtungsbefehle, entwickelt und gesendet von dem Diversity-Management- und Umschaltgerät.

**4.** Multiantennen-Bodenstation nach einem der Ansprüche 1 bis 3, bei der das Multikanal-Empfangs- und -Verarbeitungsgerät (122) ferner Folgendes umfasst:

- einen Satz von P AGC-(Automatic Gain Control)-Geräten (152, 154, 146) zum Normalisieren der empfangenen Signale am Eingang des Multikanal-Empfangs- und -Verarbeitungsgeräts (122), und
- einen Satz von P Passbandfiltern (162, 164, 166) zum Filtern der normalisierten Kanäle, zum Beispiel SRRC-Filter.

**5.** Multiantennen-Bodenstation nach einem der Ansprüche 1 bis 4, bei der das Multikanal-Empfangs- und -Verarbeitungsgerät (122) ferner Folgendes umfasst:
einen Satz von P-1 komplexen Kreuzkorrelatoren (172, 174) zum Schätzen von zeitlichen Abweichungen, Phasenabweichungen und Qualitätsabweichungen zwischen einem normalisierten und gefilterten Referenzsignal, genommen aus den P normalisierten und gefilterten Signalen, und den P-1 normalisierten und gefilterten restlichen Signalen, und Zuführen der Abweichungen zu dem Management- und Umschaltgerät, durch Suchen einer Korrelationsspitze für jeden Kreuzkorrelator (172, 174), die es zulässt, die zeitliche Abweichung zwischen den verglichenen Signalen abzuleiten, durch Nutzen des Arguments des kreuzkorrelierten Signals zum Bestimmen der Phasenabweichung zwischen den verglichenen Signalen und durch Nutzen des Korrelationsniveaus zwischen den verglichenen Signalen zum Bestimmen einer Qualitätsdifferenzanzeige.

6. Multiantennen-Bodenstation nach einem der Ansprüche 1 bis 5, bei der das Multikanal-Empfangs- und -Verarbeitungsgerät (122) ferner Folgendes umfasst:
einen Satz von P FIFO-Verzögerungsleitungen (182, 184, 186) mit programmierbarem zeitlichem Versatz, stromabwärts verbunden mit einem Satz von Multiplikatoren (192, 194, 196) mit programmierbarer Phasenkompensation, wobei die Multiplikatoren (192, 194, 196) es zulassen, dass die Phasenkompensationen am Eingang mit dem Diversity-Kombinationsgerät (124) verbunden werden.

7. Multiantennen-Bodenstation nach einem der Ansprüche 1 bis 6, bei der
das Multikanal-Empfangs- und -Verarbeitungsgerät (122) zum selektiven Justieren der Verstärkung von jedem der Ausgangskanäle konfiguriert ist, um auf progressive Weise den Ausgangspegel des Ausgangssignals einer Suche einer Ausgangskette dämpfen zu können, die aus der Diversity-Kombination entfernt werden soll, und
das Diversity- und Umschaltmanagementgerät (126) bei einer Antennenumschaltung des ersten Satelliten (32; 72) auf den zweiten Satelliten (34; 74) konfiguriert ist, zum:

Steuern einer degressiven Verstärkungsrampe auf der zu entfernenden Kette durch das Diversity-Kombinationsgerät, und
Steuern, wenn die Differentialqualität eine vorbestimmte Schwelle überschritten hat, des Diversity-Kombinationsgeräts (124) zum Entfernen der Kette.

8. Multiantennen-Bodenstation nach Anspruch 7, die Folgendes umfasst:

einen Demodulator, der am Ausgang des Diversity-Kombinationsgeräts verbunden ist, und ein Gerät zum Implementieren einer adaptiven Modulationssteuerschleife AMC, und
wobei die Dynamik der degressiven Verstärkungsrampe mit den dynamischen Charakteristiken der adaptiven Modulationssteuerschleife AMC koordiniert wird.

9. Multiantennen-Bodenstation nach einem der Ansprüche 1 bis 8, bei der
das Multikanal-Empfangs- und -Verarbeitungsgerät (122) zum selektiven Justieren der Verstärkung jedes der Ausgangskanäle konfiguriert ist, um auf progressive Weise den Ausgangspegel des Ausgangssignals einer Ausgangskette erhöhen zu können, die zu der Diversity-Kombination hinzugefügt werden soll, und
das Diversity- und Umschaltmanagementgerät (126) so konfiguriert ist, dass es bei einer einheitlichen Antennenumschaltung des ersten Satelliten (32; 72) auf den zweiten Satelliten (34; 74) und in der Phase des Zuschaltens der Antenne zum Zielsatelliten:
eine progressive Verstärkungsrampe auf der hinzuzufügenden Kette durch das Diversity-Kombinationsgerät steuert.

10. Multiantennen-Bodenstation nach einem der Ansprüche 1 bis 9, bei der
das Diversity- und Umschaltmanagementgerät (126), nach Erkennung der Abwesenheit eines Signals auf einer aktiven Kette in der Kombination, zum Senden eines Entfernungsbefehls zum Diversity-Kombinationsgerät (124) konfiguriert ist.

11. Multiantennen-Bodenstation nach einem der Ansprüche 1 bis 10, die Folgendes umfasst:

- ein Gerät (354) zum Anlegen eines selben zu emittierenden Quellsignals an eine ganzzahlige Anzahl N, gleich oder kleiner als P, von Versorgungsanschlüssen ($362_1$, $362_2$, $362_N$), und
- ein Sende- und Verarbeitungsgerät (356) zum Erzeugen, auf N Kanälen, einer Wellenfront zu einem Satelliten, genommen aus dem ersten Satelliten S1 (32; 72) und dem zweiten Satelliten S2 (34; 74), am Eingang verbunden mit den N Versorgungsanschlüssen, und mit N Sendeausgangsanschlüssen, verbunden mit N Antennen aus den P Sendeantennen oder gleich P, zum parallelen Anlegen von N verarbeiteten Ausgangssignalen, zeitlich und phasenmäßig so voneinander versetzt, dass die Wellenfronten jeder Antenne im Satellitenempfang zusammengefasst werden, und

- ein Sende-Diversity-Managementgerät (358), konfiguriert zum Steuern des Multikanal-Sende- und -Verarbeitungsgeräts (356), um zeitliche und phasenmäßige Versatzbefehle der am Ausgang des Multikanal-Sende- und -Verarbeitungsgeräts (356) gesendeten N Signale zu bestimmen und dorthin zu senden, entwickelt in Abhängigkeit von Kalibrationsmesswerten der Sendeketten, Schätzungen der internen Beiträge am Terminal bei Empfang und der mit der Entfernungsdifferenz zwischen den Sendekanälen verbundenen Beiträge.

12. Multiantennen-Bodenstation nach Anspruch 11, die eine retroaktive Kalibrationskette (392) von Sendeketten ($394_1$, $394_2$, $394_N$) umfasst, die mit den Eingangsports ($396_1$, $396_2$, $396_N$) von den N Antennen im Sendemodus durch Abtastkoppler ($398_1$, $398_2$, $398_N$), Verbindungskabel ($402_1$, $402_2$, $402_N$) und einen Kettenauswahlschalter N:1 (404) verbunden sind, kalibriert für die internen Beiträge von Sendeketten der Station im Sinne von differentialen zeitlichen und phasenmäßigen Abweichungen.

13. Multiantennen-Bodenstation nach einem der Ansprüche 11 bis 12, bei der das Multikanal-Sende- und Verarbeitungsgerät (356) und das Sende-Diversity-Managementgerät (358) zum Implementieren einer Closed-Loop-Kompensation (452) der zeitlichen und phasenmäßigen Abweichungen von den N Sendekanälen einer Sende-Diversity-Konfiguration ausgestattet und konfiguriert sind, in der
die in Sende-Diversity benutzten N Antennen (454, 456) auf dem gerichteten Satelliten (320) gleichzeitig Empfangs-Diversity-Antennen sind, die auf denselben Satelliten (320) gerichtet sind, und N identische, zeitlich und phasenmäßig voneinander versetzte Signale senden, um eine kohärente Wellenfront an dem gerichteten Satelliten (320) zu erzeugen, und
das Sende-Diversity-Managementgerät (358) einen Qualitätsmesswert der Summe der von den N Antennen ausgesendeten Träger nach Modus empfängt, wobei der Qualitätsmesswert für die Summe der Träger im Sinne von zeitlichen und phasenmäßigen Differenzen durch einen Empfänger (462) einer externen fernen Bodenstation (464) bestimmt wurde und über einen terrestrischen Rückübertragungskanal (466) oder über einen symmetrischen Rückkanal des gerichteten Satelliten (320) zurückgesendet wird, und die Zeit- und Phasenabweichungssollwerte korrigiert, die zu dem Multikanal-Sende- und Verarbeitungsgerät (356) geliefert werden, auf der Basis der von der externen Bodenstation (464) gemessenen Zeit- und Phasendifferenzen.

14. Multiantennen-Bodenstation nach Anspruch 13, bei der

- die N identischen Signale, die zeitlich und phasenmäßig voneinander versetzt sind, um eine kohärente Wellenfront an dem gerichteten Satelliten (320) zu erzeugen, Signale einer identischen Referenzsequenz sind, und die differentialen Signale des Empfängers (462) der externen Bodenstation (464) durch Korrelation bestimmt werden, oder
- die N identischen Signale, die zeitlich und phasenmäßig voneinander versetzt sind, um eine kohärente Wellenfront am gerichteten Satelliten zu erzeugen, Signale sind, die auf der Basis von Replikaten eines selben Verkehrssignals erhalten werden, und die differentialen Signale des Empfängers der externen Bodenstation durch Korrelation des vom Satelliten (320) zurückgesendeten empfangenen Signals bestimmt werden.

15. Verfahren zum transparenten Umschalten einer Kommunikationsverbindung in einem Empfangsmodus oder einem dualen Empfangs-/Sendemodus von einem ersten Ausgangssatelliten S1 auf einen zweiten Zielsatelliten S2, wobei das Umschaltverfahren von einer Bodenstation implementiert wird, die Folgendes umfasst:

- eine ganzzahlige Anzahl P, gleich oder größer als zwei, von Antennen (22, 24; 62, 64, 66; 112, 114, 116), die während einer vorbestimmten selben Zeitperiode beim Empfang jeweils einen Satelliten (32, 34; 72, 74) verfolgen können, genommen aus einem ersten Ausgangssatelliten S1 (32; 72) und einem zweiten Zielsatelliten S2 (34; 74), die beide während der Periode sichtbar sind,
- ein Multikanal-Empfangs- und -Verarbeitungsgerät (122) mit P Eingangsanschlüssen (132, 134, 136), jeweils mit P Ausgangsanschlüssen der P Antennen (112, 114, 116) verbunden, zum Empfangen, am Eingang des Empfangs- und Verarbeitungsgeräts, von P Antennensignalen, empfangen und zugeführt am Ausgang der Empfangsantennen, und mit P Ausgangsanschlüssen (142, 144, 146) zum parallelen Anlegen von P verarbeiteten Ausgangssignalen, die zeitlich und phasenmäßig aufeinander ausgerichtet sind, jeweils erhalten auf der Basis von den P empfangenen Antennensignalen, und
- ein konfigurierbares Diversity-Kombinationsgerät (124), verbunden am Eingang mit dem Multikanal-Empfangs- und -Verarbeitungsgerät (122), zum Kombinieren aller oder einiger der verarbeiteten Ausgangssignale in Abhängigkeit von einer Anweisung zum Auswählen der verarbeiteten Ausgangssignale und der zu kombinierenden verarbeiteten Ausgangssignale, und
- ein Gerät (126) für Diversity-Management und transparentes Umschalten (126) der Kommunikationsverbindung,

wobei das Verfahren zum Umschalten der Kommunikationsverbindung **dadurch gekennzeichnet ist, dass** das Umschalten der Kommunikationsverbindung durch eine Folge einer Anzahl k, gleich oder größer als 2, von transparenten und einheitlichen Antennenumschaltungen Bi gebildet wird, ausgewählt gemäß einer vorbestimmten Sequenz,

wobei jede transparente und einheitliche Antennenumschaltung Bi (44, 46; 84, 86, 88) eine Umschaltung einer Antenne (22, 24; 62, 64, 66) von einer ersten betrieblichen Empfangs-Diversity-Konfiguration mit C1(i), in der die gewählte Antenne mit Verfolgung auf den ersten Satelliten S1 gerichtet ist, in eine zweite betriebliche Empfangs-Diversity-Konfiguration C2(i) ist, in der die gewählte Antenne mit Verfolgung auf den zweiten Satelliten S2 gerichtet ist, wobei mindestens eine der ersten und der zweiten Empfangs-Diversity-Konfiguration C1(i), C2(i) eine Konfiguration ist, in der die Empfangs-Diversity auf den zwei ersten und zweiten Satelliten S1, S2 implementiert wird.

16. Verfahren zum transparenten Umschalten einer Kommunikationsverbindung nach Anspruch 15, wobei jedes transparente und einheitliche Umschalten Bi (44, 46; 84, 86, 88) Schritte des Steuerns des Multikanal-Empfangs- und -Verarbeitungsgeräts sowie des konfigurierbaren Diversity-Kombinationsgeräts durch jeweiliges Bestimmen und Senden dorthin von Folgendem beinhaltet:

* Satellitenanpeilungsbefehle, und
* Befehle zum zeitlichen und phasenmäßigen Ausrichten von am Eingang des Multikanal-Empfangs- und -Verarbeitungsgeräts empfangenen P Signalen, entwickelt in Abhängigkeit von Messwerten von zeitlichen und phasenmäßigen Abweichungen von P-1 am Eingang empfangenen Signalen in Bezug auf das am Eingang empfangene Signal, das als Referenzsignal genommen wird, und
* einer Anweisung zum Auswählen von zu kombinierenden verarbeiteten Ausgangssignalen in Abhängigkeit von der Planung des Umschaltens der ersten Diversity-Konfiguration C1 in die zweite Diversity-Konfiguration C2 und in Abhängigkeit von Qualitätsmesswerten für die am Eingang des Empfangs- und Verarbeitungsgeräts empfangenen Signale,

wobei die Steuerschritte von dem transparenten Diversity- und Umschaltmanagementgerät der Kommunikationsverbindung implementiert werden.

## Claims

1. A multi-antenna ground station of a satellite telecommunications system (14) using a constellation of moving satellites (32, 34; 72, 74),

the ground station comprising:

- an integer number P, greater than or equal to two, of antennae (22, 24; 62, 64, 66; 112, 114, 116) that in reception are each able to track, for the same predetermined time period, one satellite (32, 34; 72, 74) taken from a first source satellite S1 (32; 72) and a second destination satellite S2 (34; 74), both being in sight during said period;
- a multi-channel reception and processing device (122), with P input terminals (132, 134, 136), respectively connected to P output terminals of the P antennae (112, 114, 116), for receiving, as input from said reception and processing device, P antenna signals, received and supplied as output from said reception antennae, and with P output terminals (142, 144, 146) for delivering in parallel P processed output signals, aligned together by time and by phase, respectively obtained from the P received antenna signals; and
- a configurable diversity combination device (124), connected as input to the multi-channel reception and processing device (122), for combining some or all of the processed output signals as a function of an instruction for selecting the processed output signals and the processed signals to be combined; and
- a device for diversity management and seamless handover (126) of a reception communication link from the first source satellite S1 to the second destination satellite S2,

the ground station being **characterised in that**:
the diversity management and seamless handover device (126) is configured:

- to manage and coordinate the execution of a handover of the communication link from the first source satellite S1 (32; 72) to the second destination satellite S2 (34; 74), said handover of the communication link being made up of a succession of a number k, greater than or equal to 2, of seamless and unitary handovers Bi of antennae, selected according to a predetermined sequence, each seamless and unitary handover Bi of antennae (44, 46; 84, 86, 88) being a handover of an antenna (22, 24; 62, 64, 66) from a first operational reception diversity configuration C1(i), in which the selected antenna is pointed with tracking on the first satellite S1, to a second operational reception diversity configuration C2(i), in which the selected antenna is pointed with tracking on the second satellite S2, at least one of the first and second reception diversity configurations C1(i), C2(i) being a configuration in which the reception diversity is implemented on the two first and second satellites S1, S2; and
- during each seamless and unitary handover Bi (32, 34; 84, 86, 88), to control the antennae (22, 24; 62, 64, 66), the multi-channel reception and processing device as well as the configurable diversity combination device by determining and respectively sending them:

* satellite acquisition pointing commands; and
* time and phase alignment commands of the P signals received as input from the multi-channel reception and processing device, established as a function of measurements of time and phase deviations of P-1 signals received as input relative to the signal received as input taken as the reference signal; and
* an instruction for selecting the processed output signals to be combined as a function of the schedule for the handover of the first diversity configuration C1(i) to the second diversity configuration C2(i) and as a function of quality measurements of the signals received as input from the reception and processing device.

2. The multi-antenna ground station as claimed in claim 1, wherein:

- the whole number P of reception antennae (22, 24; 62, 64, 66; 112, 114, 116) each able to point and to track, for the same predetermined time period, one satellite taken from a first satellite S1 (32; 72) and a second satellite S2 (34; 74), and of channels of the reception and processing device (122), is greater than or equal to three, and preferably equal to three; and
- the first and second reception diversity configurations C1(i), C2(i) of each unitary seamless handover Bi are each configurations in which the reception diversity is implemented on the two first and second satellites S1, S2 (32, 34; 72, 74); and
- during each unitary seamless handover Bi and during the handover of the communication link, a reception diversity on at least two antennae (22, 24; 62, 64, 66; 112, 114, 116) is continuously provided.

3. The multi-antenna ground station as claimed in any one of claims 1 to 2, wherein:
- the multi-channel reception and processing device (122) is configured:

* to receive, normalise and filter, on P distinct and separate channels, the P received antenna signals supplied as output by the P antennae (112, 114, 116), as P normalised and filtered signals; then
* to estimate time deviations, phase deviations and quality deviations between a reference normalised and filtered signal, taken from the P normalised and filtered signals, and the remaining P-1 normalised and filtered signals, and to supply the management and handover device with said deviations; then
* for each channel, to apply a time compensation and a phase compensation to the filtered signal associated with the channel on the basis of the corresponding time and phase alignment commands, established and sent by the diversity management and handover device.

4. The multi-antenna ground station as claimed in any one of claims 1 to 3, wherein the multi-channel reception and processing device (122) further comprises:

a bank of P automatic gain control AGC devices (152, 154, 146) for normalising the signals received as input from the multi-channel reception and processing device (122); and
a bank of P band-pass filters (162, 164, 166) for filtering the normalised signals, for example, SRRC filters.

5. The multi-antenna ground station as claimed in any one of claims 1 to 4, wherein the multi-channel reception and processing device (122) further comprises:
a bank of P-1 complex cross-correlators (172, 174) for estimating time deviations, phase deviations and quality deviations between a reference normalised and filtered signal, taken from the P normalised and filtered signals, and the remaining P-1 normalised and filtered signals, and for supplying the management and handover device with said deviations, by seeking, for each cross-correlator (172, 174), a correlation peak that allows the time deviation between the compared signals to be deduced, by using the logic of the cross-correlated signal to determine the phase deviation between the compared signals and by using the correlation level between the compared signals to determine a quality difference indication.

6. The multi-antenna ground station as claimed in any one of claims 1 to 5, wherein the multi-channel reception and processing device (122) further comprises:
a bank of P FIFO delay lines (182, 184, 186) with a programmable time lag, connected downstream to a bank of multipliers (192, 194, 196) with programmable phase compensation, the multipliers (192, 194, 196) allowing the phase compensations being connected as input to the diversity combination device (124).

7. The multi-antenna ground station as claimed in any one of claims 1 to 6, wherein:

the multi-channel reception and processing device (122) is configured to selectively adjust the gain of each of the channels so as to be able to progressively attenuate the output level of the output signal of a search of an output chain that is intended to be removed from the diversity combination; and
the diversity management and handover device (126) is configured, during an antenna handover from the first satellite (32; 72) to the second satellite (34; 74):

to command a degressive gain ramp on the chain to be removed by the diversity combination device; and,
when the quality differential has exceeded a predetermined threshold,
to command the diversity combination device (124) to remove said chain.

8. The multi-antenna ground station as claimed in claim 7, comprising
a demodulator connected at the output of the diversity combination device and a device for implementing an adaptive modulation control AMC loop; and
wherein the dynamic of the degressive gain ramp is coordinated with the dynamic characteristics of the adaptive modulation control AMC loop.

9. The multi-antenna ground station as claimed in any one of claims 1 to 8, wherein:

the multi-channel reception and processing device (122) is configured to selectively adjust the gain of each of the channels so as to be able to progressively increase the output level of the output signal of an output chain that is intended to be added to the diversity combination; and
the diversity management and handover device (126) is configured, during a unitary handover of an antenna from the first satellite (32; 72) to the second satellite (34; 74) and during the phase of joining the antenna to the destination satellite:
to command a progressive gain ramp on the chain to be added by the diversity combination device.

10. The multi-antenna ground station as claimed in any one of claims 1 to 9,
wherein the diversity management and handover device (126) is configured, upon detection of the lack of a signal on an active chain in the combination, to send a command to withdraw the diversity combination device (124).

11. The multi-antenna ground station as claimed in any one of claims 1 to 10, comprising:

- a device (354) for supplying the same signal source to be transmitted as a whole number N, less than or equal to P, of supply terminals ($362_1$, $362_2$, $362_N$); and
- a transmission and processing device (356) for generating, on N channels, a wavefront intended for a satellite, taken from the first satellite S1 (32; 72) and the second satellite S2 (34; 74), connected as input to the N supply terminals, and having N transmission output terminals connected to N antennae from the P transmission antennae or equal to P, in order to simultaneously deliver N processed output signals, offset relative to each other by time and by phase so that the wavefronts of each antenna are grouped together into a reception satellite; and
- a transmission diversity management device (358) configured to control the multi-channel transmission and processing device (356) by determining, and sending thereto, time and phase deviation commands of the N signals transmitted as output from the multi-channel transmission and processing device (356) that are established as a function of calibration measurements of the transmission chains, estimations of the internal contributions at the terminal on reception and of the contributions associated with the difference in distance between the transmission channels.

12. The multi-antenna ground station as claimed in claim 11, comprising a chain (392) for retroactive calibration of the transmission chains ($394_1$, $394_2$, $394_N$) connected to the input ports ($396_1$, $396_2$, $396_N$) of the N antennae in transmission mode through sampling couplers ($398_1$, $398_2$, $398_N$), connection cables ($402_1$, $402_2$, $402_N$) and a chain selection switch (404) N:1, calibrated for the internal contributions of transmission chains of the station in terms of differential time and phase deviations.

13. The multi-antenna ground station as claimed in any one of claims 11 to 12, wherein the multi-channel transmission and processing device (356) and the transmission diversity management device (358) are arranged and configured to implement a closed-loop compensation (452) of the time and phase deviations of the N transmission channels of a diversity transmission configuration in which

the N antennae (454, 456) used in transmission diversity on the pointed satellite (320) are at the same time reception diversity antennae, pointing on the same satellite (320) and sending N identical signals that are offset relative to each other by time and by phase, to generate a coherent wavefront on the pointed satellite (320); and

the transmission diversity management device (358) receives a quality measurement of the grouping together of the carriers transmitted by the N antenna by mode, with the quality measurement of the grouping together of the carriers having been determined in terms of time and phase differences by a receiver (462) of a remote external ground station (464) and retransmitted via a transmission line terrestrial return channel (466) or via a symmetrical line of a return channel of the pointed satellite (320), and corrects the time and phase deviation setpoints, supplied to the multi-channel transmission and processing device (356), on the basis of the time and phase differences measured by the external ground station (464).

14. The multi-antenna ground station as claimed in claim 13, wherein:

- the N identical signals, which are offset relative to each other by time and by phase to generate a coherent wavefront on the pointed satellite (320), are signals of an identical reference sequence, and the differential signals of the receiver (462) of the external ground station (464) are determined by correlation; or
- the N identical signals, which are offset relative to each other by time and by phase to generate a coherent wavefront on the pointed satellite, are signals obtained from replicas of the same traffic signal, and the differential signals of the receiver of the external ground station are determined by correlation of the received signal retransmitted by the satellite (320).

15. A method for seamless handover of a communication link in a reception mode or a dual reception/transmission mode from a first source satellite S1 to a second destination satellite S2,
the handover method being implemented by a ground station comprising:

- a whole number P, greater than or equal to two, of antennae (22, 24; 62, 64, 66; 112, 114, 116) that in reception are each able to track, for the same predetermined time period, one satellite (32, 34; 72, 74) taken from a first source satellite S1 (32; 72) and a second destination satellite S2 (34; 74), both being in sight during said period;
- a multi-channel reception and processing device (122), with P input terminals (132, 134, 136), respectively connected to P output terminals of the P antennae (112, 114, 116), for receiving, as input from said reception and processing device, P antenna signals, received and supplied as output from said reception antennae, and with P output terminals (142, 144, 146) for simultaneously delivering P processed output signals, aligned together by time and by phase, respectively obtained from the P received antenna signals; and
- a configurable diversity combination device (124), connected as input to the multi-channel reception and processing device (122), for combining some or all of the processed output signals as a function of an instruction for selecting the processed output signals and of the processed signals to be combined; and
- a device for diversity management and seamless handover (126) of the reception communication link

the method for handover of the communication link being **characterised in that**:

the handover of the communication link is made up of a succession of a number k, greater than or equal to 2, of seamless and unitary handovers Bi of antennae, selected according to a predetermined sequence,
each seamless and unitary handover Bi of antennae (44, 46; 84, 86, 88) being a handover of an antenna (22, 24; 62, 64, 66) from a first operational reception diversity configuration C1(i), in which the selected antenna is pointed with tracking on the first satellite S1, to a second operational reception diversity configuration C2(i), in which the selected antenna is pointed with tracking on the second satellite S2, at least one of the first and second reception diversity configurations C1(i), C2(i) being a configuration in which the reception diversity is implemented on the two first and second satellites S1, S2.

16. The method for seamless handover of a communication link as claimed in claim 15, wherein each seamless and unitary handover Bi (44, 46; 84, 86, 88) comprises steps of controlling the multi-channel reception and processing device as well as the configurable diversity management device by determining and respectively sending them:

* satellite acquisition pointing commands; and
* time and phase alignment commands of the P signals received as input from the multi-channel reception and processing device, established as a function of measurements of time and phase deviations of P-1 signals received as input relative to the signal received as input taken as the reference signal; and
* an instruction for selecting the processed output signals to be combined as a function of the schedule for the handover of the first diversity configuration C1 to the second diversity configuration C2 and as a function of quality measurements of the signals received as input from the reception and processing device,

the control steps being implemented by the device for diversity management and seamless handover of the communication link.

FIG.1

FIG.2

EP 3 404 849 B1

FIG.3

EP 3 404 849 B1

FIG.4

Contribution interne de la
station sol

Contribution de la distance
antenne station sol-satellite

322

324

320

302

314

# 1

304

316

# N

306

328

FIG.5

EP 3 404 849 B1

31

FIG.6

302

Dispositif
Rx/Tx
et de traitement

$394_1$   Chaine RF Tx # 1   $396_1$

BUC

$398_1$

$402_1$

408

LPF   X   $402_2$

LO   404

392

$394_2$   Chaine RF Tx # 2   $398_2$

BUC

$396_2$

$402_N$

$394_N$   Chaine RF Tx # N   $398_N$

BUC

$396_N$

FIG.7

FIG.8

EP 3 404 849 B1

# EP 3 404 849 B1

## RÉFÉRENCES CITÉES DANS LA DESCRIPTION

**Documents brevets cités dans la description**

- EP 2779482 A1